# EUROPEAN PATENT APPLICATION

(11) **EP 2 154 480 A1**
(43) Date of publication of application: **17.02.2010**
(21) Application number: 08752316.3
(22) Date of filing: 02.05.2008
(51) Int. Cl.: G01C 21/00, B60R 1/00, B60R 11/02, G01S 5/14, G08G 1/0969, G09B 29/00, G09B 29/10

(54) **NAVIGATION DEVICE**

(30) Priority: 03.05.2007 JP 2007121988; 26.12.2007 JP 2007334419
(71) Applicant: Victor Company Of Japan, Limited, Kanagawa-ku Yokohama-shi Kanagawa 221-8528 (JP); Honda Access Corp., Niiza-shi Saitama 352-8589 (JP)
(72) Inventor: TOKUE, Jun, Yokohama-shi Kanagawa 221-8528 (JP); YAMAMOTO, Kazuhiro, Yokohama-shi Kanagawa 221-8528 (JP); MASUDA, Hiroaki, Yokohama-shi Kanagawa 221-8528 (JP); OISHI, Yasuo, Niiza-shi Saitama 352-8589 (JP)
(74) Representative: Herzog, Markus
(86) International application number: PCT/JP2008/058411
(87) International publication number: WO 2008/139971

(57) **Abstract**

In a navigation apparatus having a base unit (10) that is fastenable to a vehicle and a front panel unit (14) that is attachable to and detachable from the base unit, it is configured such that there are provided with at least three detectors including a receiver (20) that receives a GPS signal, a wheel speed sensor (22) that detects rotational speed of a wheel and a gyrosensor (24) that detects angular velocity about a vertical axis; and the microcomputer of the front panel unit determines the detector or detectors to be used for determining the location of the vehicle in accordance with output condition of the detector or detectors. Since the determination is made based on the output condition of the detector or detectors, the detector(s) used for location determination can be optimally selected to enhance the accuracy of vehicle location determination, while the flexibility of detector use in location determination can be improved in the point that the location determination is not necessarily restricted to use of the three detectors.

## Description

### TECHNICAL FIELD

This invention relates to a navigation apparatus, more specifically to an apparatus mounted in a vehicle for communicating to a driver information (directional, map, road, etc.) for reaching a destination.

### BACKGROUND ART

Although navigation apparatuses of the foregoing type were initially limited to types integrally fixed to the vehicle, there have recently also been proposed easily-carried portable types, as well as detachable navigation apparatuses that further improve ease-of-use by enabling only the section with navigation functions to be mounted and dismounted (see, for example, Patent Reference 1).

According to the technology taught by Patent Reference 1, a navigation apparatus comprising a GPS receiver connected to a GPS antenna, a gyrosensor, a vehicle signal processor circuit including a vehicle speed signal, a display for displaying a map, and an ECU for overall control is equipped with a vehicle side unit provided on the vehicle side and a detachable unit detachably provided on the vehicle, and at least the gyrosensor and the vehicle signal processor circuit are mounted on the vehicle side, while the display and ECU are installed in the detachable unit to enable removal from the vehicle for use in the outside of the vehicle.
Patent Reference 1 : Japanese Patent No. 3376813

### DISCLOSURE OF THE INVENTION

### Problems to be Solved by the Invention

The aforesaid prior art technology is configured to conduct location determination based on the outputs of three sensors when the detachable unit is attached to the vehicle side unit and to conduct drive simulation and the like using the detachable unit when it is removed. In other words, room for improvement remains in the point that location determination is limited to the use of the three sensors.

The object of this invention is therefore to solve the aforesaid drawbacks and provide a navigation apparatus that uses three sensor outputs, including GPS signals and the like, and is equipped with a vehicle side unit disposed in a vehicle and a detachable unit installed attachably/detachably with respect to the vehicle, which navigation apparatus is improved in the flexibility of sensor utilization for location determination.

### Means for Solving the Problems

In order to achieve the object, as recited in claim 1 mentioned below, this invention is configured to have a navigation apparatus having: a base unit that is fastenable to a vehicle and is equipped with at least a microcomputer; and a front panel unit that is attachable to and detachable from the base unit and is equipped with at least a display displaying map data and a microcomputer performing a navigation function to indicate a determined location of the vehicle on the map data, **characterized in that**: there are provided with at least three detectors including a receiver that receives a GPS signal, a wheel speed sensor that detects rotational speed of a wheel of the vehicle and a gyrosensor that detects angular velocity about a vertical axis of the vehicle; and the microcomputer of the front panel unit determines the detector or detectors to be used for determining the location of the vehicle in accordance with output condition of the detector or detectors.

As recited in claim 2 mentioned below, the apparatus is configured such that when an instruction regarding the detector or detectors to be used for determining the location of the vehicle is inputted from outside, the microcomputer of the front panel unit determines the detector or detectors to be used for determining the location of the vehicle in accordance with the instruction from the outside.

As recited in claim 3 mentioned below, this invention is configured to have a navigation apparatus having: a base unit that is fastenable to a vehicle and is equipped with at least a microcomputer; and a front panel unit that is attachable to and detachable from the base unit and is equipped with at least a display displaying map data and a microcomputer performing a navigation function to indicate a determined location of the vehicle on the map data, **characterized in that**: there are provided with at least three detectors including a receiver that receives a GPS signal, a wheel speed sensor that detects rotational speed of a wheel of the vehicle and a gyrosensor that detects angular velocity about a vertical axis of the vehicle; and the microcomputer of the front panel unit determines the detector or detectors to be used for determining the location of the vehicle in accordance with attached/detached condition of the front panel unit.

As recited in claim 4 mentioned below, the apparatus is configured to include a cradle unit that is fastenable to the vehicle and is equipped with at least a microcomputer and a receiver receiving a GPS signal, wherein the front panel unit is attachable to and detachable from the cradle unit; and the microcomputer of the front panel unit determines the location of the vehicle using outputs of the three detectors when the front panel unit is attached to the base unit, and determines the location of the vehicle using only the GPS signal when the front panel unit is attached to the cradle unit.

As recited in claim 5 mentioned below, this invention is configured to have a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer performing a navigation function to indicate a determined location of the vehicle on the map data, **characterized in that**: there are provided with at least three detectors including a receiver that receives a GPS signal, a wheel speed sensor that detects rotational speed of a wheel of the vehicle and a gyrosensor that detects angular velocity about a vertical axis of the vehicle; and a short-range transceiver module including an antenna, and a dedicated image data receiving module are installed on the front panel unit.

As recited in claim 6 mentioned below, this invention is configured to have a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer performing a navigation function to indicate a determined location of the vehicle on the map data, **characterized in that**: there are provided with at least three detectors including a receiver that receives a GPS signal, a wheel speed sensor that detects rotational speed of a wheel of the vehicle and a gyrosensor that detects angular velocity about a vertical axis of the vehicle; the microcomputer of the base unit retains the location of the vehicle even after the front panel unit is detached from the base unit; and the microcomputer of the front panel unit determines the location of the vehicle based on driving condition of the vehicle.

As recited in claim 7 mentioned below, this invention is configured to have a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer performing a navigation function to indicate a determined location of the vehicle on the map data, **characterized in that:** there are provided with at least three detectors including a receiver that receives a GPS signal, a wheel speed sensor that detects rotational speed of a wheel of the vehicle and a gyrosensor that detects angular velocity about a vertical axis of the vehicle; a control program of the microcomputer of the front panel unit is configured to include a graphical user interface function that is provided with a liquid crystal panel displaying a menu and a touch panel overlaid thereon on the liquid crystal panel to be pressed by a user to execute a specified function, an application function that executes the operation selected through the graphical user interface function, and a platform function that defines at least processing times for the functions; and an undeletable button is displayed on the touch panel.

As recited in claim 8 mentioned below, this invention is configured to have a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer performing a navigation function to indicate a determined location of the vehicle on the map data, **characterized in that**: there are provided with at least three detectors including a receiver that receives a GPS signal, a wheel speed sensor that detects rotational speed of a wheel of the vehicle and a gyrosensor that detects angular velocity about a vertical axis of the vehicle; and a tuner that receives a TV image is provided in the base unit such that an output of the tuner is transferred from the microcomputer of the base unit to the front panel unit.

As recited in claim 9 mentioned below, this invention is configured to have a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer performing a navigation function to indicate a determined location of the vehicle on the map data, characterized by: at least a receiver that receives a GPS signal; an FM transmitter; and means for storing a database of frequencies of local radio stations in a region where the vehicle is traveling, wherein a vacant frequency for the region where the vehicle is traveling is searched and the searched frequency is displayed on the liquid crystal panel of the front panel unit.

As recited in claim 10 mentioned below, the apparatus is configured to include a cradle unit that is attachable to or detachable from the front panel unit and is equipped with at least a microcomputer, wherein the FM transmitter is installed in the cradle unit; and the microcomputer of the cradle unit searches a vacant frequency for a region where the vehicle is traveling and displays the searched frequency on the liquid crystal panel of the front panel unit.

### Effects of the invention

In claim 1, in a navigation apparatus having: a base unit that is fastenable to a vehicle; and a front panel unit that is attachable to and detachable from the base unit, it is configured such that there are provided with at least three detectors including a receiver that receives a GPS signal, a wheel speed sensor that detects rotational speed of a wheel of the vehicle and a gyrosensor that detects angular velocity about a vertical axis of the vehicle; and the microcomputer of the front panel unit determines the detector or detectors to be used for determining the location of the vehicle in accordance with output condition of the detector or detectors. With this, the sensor(s) used for location determination can be optimally selected to enhance the accuracy of vehicle location determination, while the flexibility of detector use in location determination can be improved in the point that the location determination is not necessarily restricted to use of the three sensors.

Further, ease of use as a navigation apparatus can be improved by the adoption of the detachable format enabling the front panel unit to be detached from the base unit and mounted in another vehicle or to be taken home for input of destinations, routes and the like.

In claim 2, in the apparatus, it is configured such that when an instruction regarding the detector or detectors to be used for determining the location of the vehicle is inputted from outside, the microcomputer of the front panel unit determines the detector or detectors to be used for determining the location of the vehicle in accordance with the instruction from the outside. With this, in addition to the effect as that of claim 1, when a radical change the user can readily discern arises in the road surface condition, such as when the tires were changed to tires of a different diameter, e.g., snow tires, or when an ordinary road surface changes to a slippery, icy road surface, the accuracy of vehicle location determination can be further enhanced by enabling selection of the detector(s) in response to the change.

In claim 3, in a navigation apparatus having: a base unit that is fastenable to a vehicle; and a front panel unit that is attachable to and detachable from the base unit, it is configured such that there are provided with at least three detectors including a receiver that receives a GPS signal, a wheel speed sensor that detects rotational speed of a wheel of the vehicle and a gyrosensor that detects angular velocity about a vertical axis of the vehicle; and the microcomputer of the front panel unit determines the detector or detectors to be used for determining the location of the vehicle in accordance with attached/detached condition of the front panel unit. With this, the flexibility of detector use in location determination can be improved.

Further, ease of use as a navigation apparatus can be improved by the adoption of the detachable format enabling the front panel unit to be detached from the base unit and mounted in another vehicle or to be taken home for input of destinations, routes and the like.

In claim 4, in the apparatus, it is configured to include a cradle unit that is fastenable to the vehicle and is equipped with at least a microcomputer and a receiver receiving a GPS signal, wherein the front panel unit is attachable to and detachable from the cradle unit; and the microcomputer of the front panel unit determines the location of the vehicle using outputs of the three detectors when the front panel unit is attached to the base unit, and determines the location of the vehicle using only the GPS signal when the front panel unit is attached to the cradle unit. With this, in addition to the foregoing effects, the cradle unit that is attachable/detachable with the front panel unit 14 and determines location using GPS signals is provided, thereby further enhancing ease of use as a navigation apparatus.

In claim 5, in a navigation apparatus having: a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer (navigation microcomputer) performing a navigation function to indicate a determined location of the vehicle on the map data, it is configured such that the location of the vehicle is determined by using at least one of three detectors including a receiver that receives a GPS signal, a wheel speed sensor that detects rotational speed of a wheel of the vehicle and a gyrosensor that detects angular velocity about a vertical axis of the vehicle; and a short-range transceiver module including an antenna, and a dedicated image data receiving module are installed on the front panel unit, i.e., on the back thereof, more specifically, such that the dedicated image data receiving module is installed on the front panel unit which is also installed with the navigation microcomputer operating the liquid crystal panel. With this, images can be displayed without time lag.

In claim 6, in a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer performing a navigation function to indicate a determined location of the vehicle on the map data, it is configured such that the location of the vehicle is determined by using at least one of three detectors including a receiver that receives a GPS signal, a wheel speed sensor that detects rotational speed of a wheel of the vehicle and a gyrosensor that detects angular velocity about a vertical axis of the vehicle; the microcomputer of the base unit retains the location of the vehicle even after the front panel unit is detached from the base unit; and the microcomputer of the front panel unit determines the location of the vehicle based on driving condition of the vehicle. With this, this makes it possible by using the stored data to immediately determine location even when the front panel unit is detached, insofar as the vehicle is not driving, while use of incorrect location data can be prevented because it is possible to avoid using the stored data when the vehicle has moved.

In claim 7, in a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer performing a navigation function to indicate a determined location of the vehicle on the map data, it is configured such that the location of the vehicle is determined by using at least one of three detectors including a receiver that receives a GPS signal, a wheel speed sensor that detects rotational speed of a wheel of the vehicle and a gyrosensor that detects angular velocity about a vertical axis of the vehicle; a control program of the microcomputer of the front panel unit is configured to include a graphical user interface (GUI) function that is provided with a liquid crystal panel displaying a menu and a touch panel overlaid thereon on the liquid crystal panel to be pressed by a user to execute a specified function, an application function that executes the operation selected through the graphical user interface function, and a platform function that defines at least processing times for the functions; and an undeletable button is displayed on the touch panel. Use of the GUI facilitates user operation by giving the user a visual understanding of the operation method and simplifies user operation even further by making it possible to narrow down the menu buttons as required. Further, even when users customize the GUI on their own, they do not end up inadvertently deleting necessary buttons. In addition, modification in accordance with the vehicle model is also facilitated.

In claim 8, in a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer performing a navigation function to indicate a determined location of the vehicle on the map data, it is configured such that the location of the vehicle is determined by using at least one of three detectors including a receiver that receives a GPS signal, a wheel speed sensor that detects rotational speed of a wheel of the vehicle and a gyrosensor that detects angular velocity about a vertical axis of the vehicle; and a tuner that receives a TV image is provided in the base unit such that an output of the tuner is transferred from the microcomputer of the base unit to the front panel unit. Specifically, since the system microcomputer of the base unit receives the output of the wheel speed sensor, it becomes possible to easily determine whether the vehicle is driving, and restrict the operation of the TV tuner when driving is found to be in progress. Moreover, since the determination of whether the vehicle is driving and the restriction of TV tuner operation are completed inside the base unit, it can make difficult to disable the TV view restriction by hacking from the outside.

In claim 9, in a navigation apparatus having: a base unit that is fastenable to a vehicle and is equipped with at least a microcomputer; and a front panel unit that is attachable to and detachable from the base unit and is equipped with at least a liquid crystal panel displaying map data and a microcomputer performing a navigation function to indicate a determined location of the vehicle on the map data, it is configured to include a receiver that receives a GPS signal for determining the location of the vehicle; an FM transmitter; and means for storing a database of frequencies of local radio stations in a region where the vehicle is traveling, wherein a vacant frequency for the region where the vehicle is traveling is searched and the searched frequency is displayed on the liquid crystal panel of the front panel unit. With this, by tuning the receiver to the frequency, the user can listen to music contents and voice guidance outputted from the onboard speaker and can listen to the music contents and voice guidance in a low-noise condition.

In claim 10, the apparatus is configured to include a cradle unit that is attachable to or detachable from the front panel unit and is equipped with at least a microcomputer, wherein the FM transmitter is installed in the cradle unit; and the microcomputer of the cradle unit searches a vacant frequency for a region where the vehicle is traveling and displays the searched frequency on the liquid crystal panel of the front panel unit. With this, similarly to the effects as those of claim 9, by tuning the receiver to the frequency, the user can listen to music contents and voice guidance outputted from the onboard speaker and can listen to the music contents and voice guidance in a low-noise condition.

### BRIEF DESCRIPTION OF THE DRAWINGS

FIG. 1 is a perspective view from the front of a base unit and front panel unit of a navigation apparatus according to a first embodiment of this invention.
FIG 2 is a perspective view from the rear of the front panel unit shown in FIG 1.
FIG. 3 is a perspective view of the front panel unit (rear side) shown in FIG. 1, a cradle unit and a cradle unit attachment arm.
FIG 4 is an explanatory view showing the base unit shown in FIG. 1 and the cradle unit in the installed condition.
FIG. 5 is a set of explanatory views of a vehicle driver's seat of the vehicle shown in FIG. 4.
FIG. 6 is a block diagram showing the internal configuration of the front panel unit and base unit.
FIG. 7 is a block diagram showing the internal configuration of the front panel unit and cradle unit.
FIG. 8 is a block diagram showing the software configuration of navigation microcomputer shown in FIG 6.
FIG. 9 is a flowchart showing the software configuration of the navigation microcomputer shown in FIG. 6.
FIG. 10 is a flowchart showing processing of detecting which of the base unit or cradle unit is attached, which is executed by the navigation microcomputer of the front panel unit.
FIG. 11 is a flowchart showing processing of determining sensor(s) whose output is to be used for determining the location of the vehicle, which is similarly executed by the navigation microcomputer of the front panel unit following the processing of FIG. 10.
FIG. 12 is an explanatory view showing the location information immediately before removal, which is stored together with an ID number in nonvolatile memories of the base unit and front panel unit.
FIG. 13 is a flowchart showing processing of determining whether the vehicle moved while the front panel unit was detached, which is executed by a system microcomputer of the base unit.
FIG. 14 is a flowchart showing processing executed by the navigation microcomputer 14m responsive to the processing of FIG. 13.
FIG. 15 is an explanatory view of processing in accordance with priority for preventing interference of devices shown in FIG. 6, etc.
FIG. 16 is a flowchart showing processing executed by the navigation microcomputer of the front panel unit based on FIG. 15.
FIG. 17 is a block diagram of the configuration of GUI (function) shown in FIG. 8.
FIG. 18 is an explanatory view showing processing of function deleting in the configuration in FIG. 17.
FIG. 19 is a flowchart showing skin file setting processing in the case where a single front panel unit is shared by users of multiple vehicles.
FIG. 20 is a flowchart showing processing of skin file automatic selection, which is executed following the processing of FIG. 19.
FIG. 21 is an explanatory view showing examples of buttons that must not be deleted in function deleting of FIG. 18.
FIG. 22 is a flowchart of processing executed in accordance with FIG. 21.
FIG. 23 is a flowchart of processing of determining theft of the front panel unit, which is executed by the navigation microcomputer.
FIG. 24 is a flowchart showing a main routine for conducting the processing shown in FIG. 10, etc., which is executed by the microcomputers such as the navigation microcomputer of the front panel unit.
FIG. 25 is a flowchart showing interrupt processing routine described in the processing of FIG. 24.
FIG. 26 is a block diagram showing the hardware configuration of the microcomputers used for the interrupt processing of FIG. 25.
FIG. 27 is an explanatory view of the configuration of an antenna shown in FIG. 6, etc.
FIG. 28 is a similar explanatory view of another configuration of an antenna shown in FIG. 6, etc.
FIG. 29 is a similar explanatory view of still another configuration of an antenna shown in FIG. 6, etc.
FIG. 30 is a flowchart similar to FIG. 10, but showing the operation of a navigation apparatus according to a second embodiment of this invention.

### BEST MODES FOR CARRYING OUT THE INVENTION

Best modes for carrying out the navigation apparatus according to this invention are explained with reference to the attached drawings in the following.

### First Embodiment

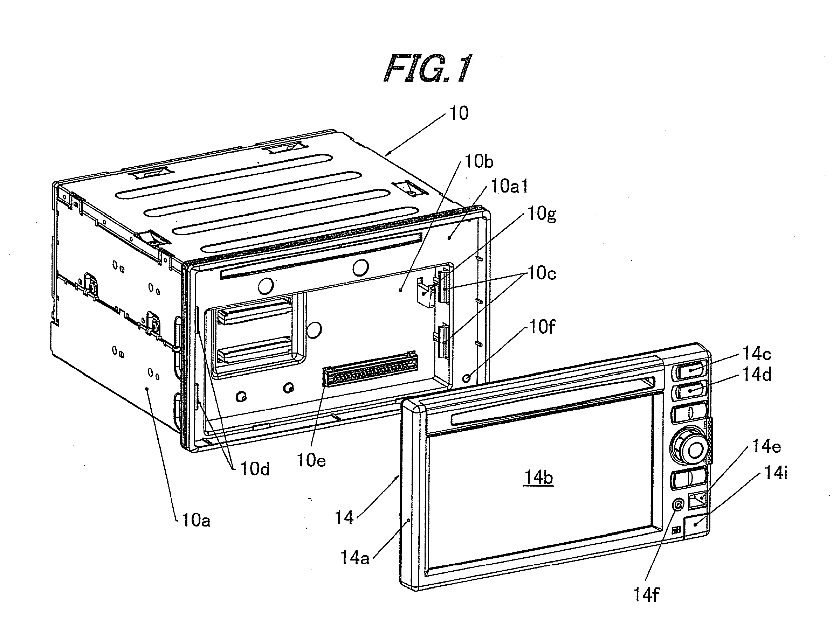

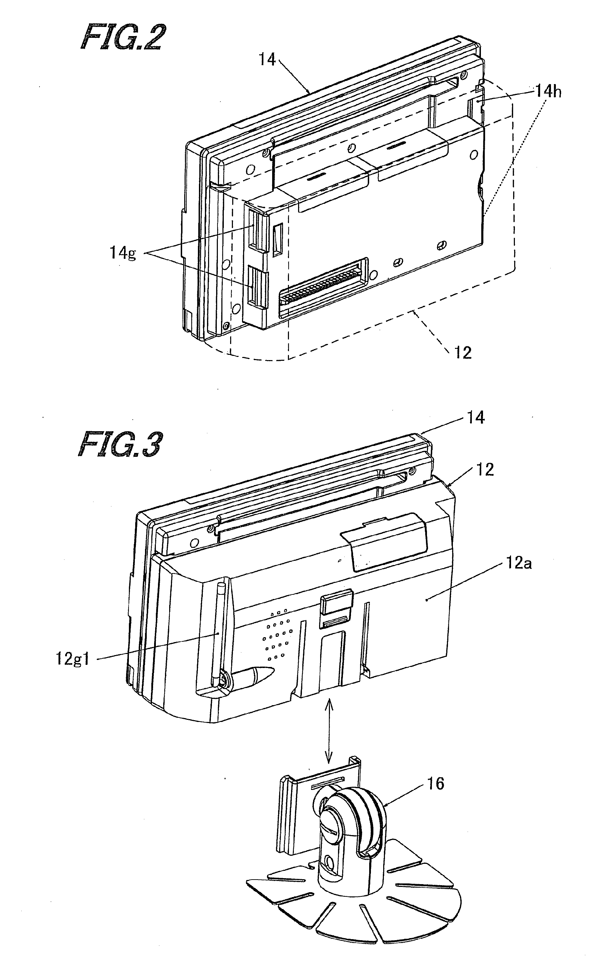

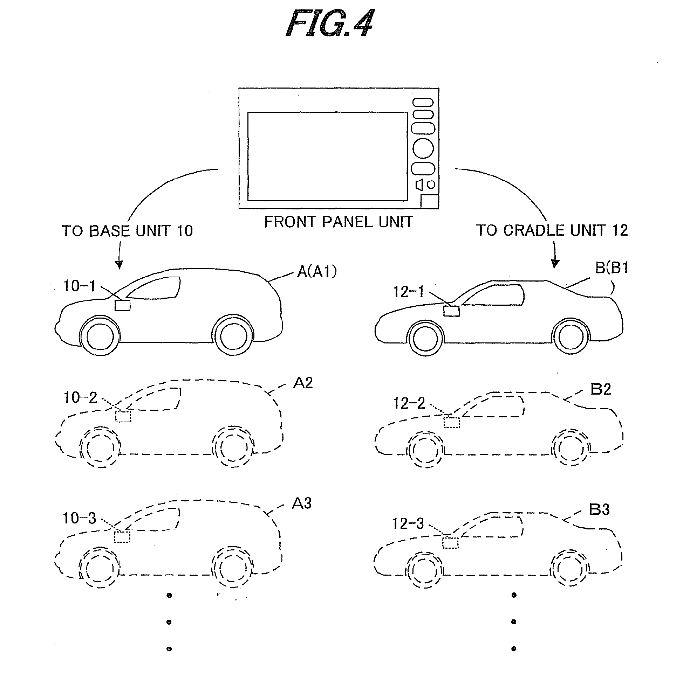

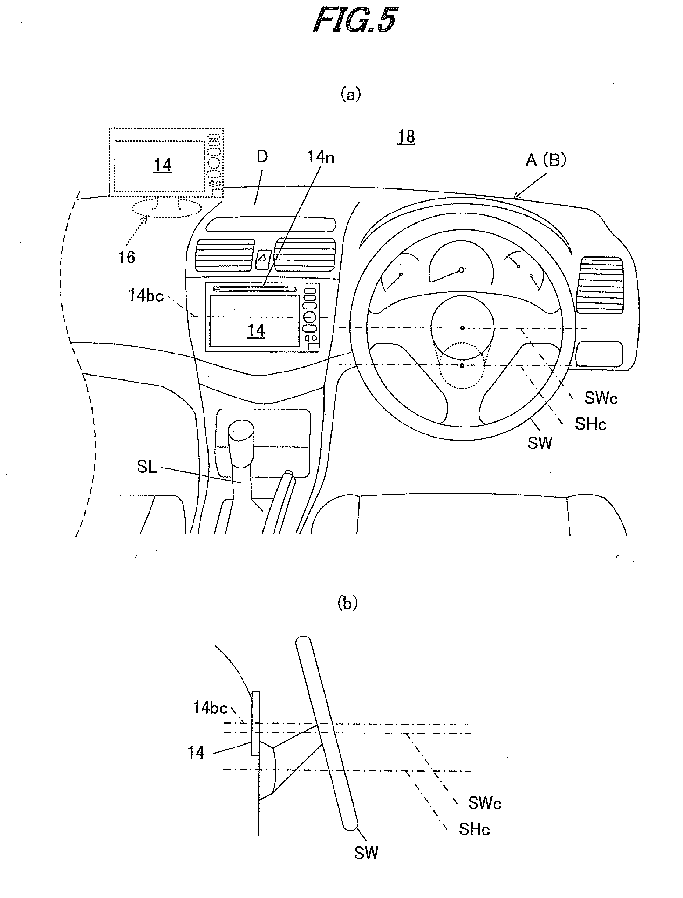

FIG. 1 is a perspective view from the front of a base unit and front panel unit of a navigation apparatus according to a first embodiment of this invention, FIG. 2 is perspective view from the rear of the front panel unit, and FIG. 3 is perspective view of the front panel unit (rear side), a cradle unit and a cradle unit attachment arm. FIG. 4 is an explanatory view showing it in the installed condition, FIG. 5(a) is an explanatory view from a vehicle driver's seat, and FIG. 5(b) is a side view thereof showing the vicinity of a steering wheel.

As illustrated, the navigation apparatus according to this embodiment of the invention is fastened to or built into (is fastenable to/in) the dashboard of a vehicle A, and is equipped with the base unit 10 supplied with operating power from a power supply (battery) of the vehicle A, the cradle unit 12 to be fastened (fastenable) on the dashboard of a vehicle B and supplied with operating power from a power supply (battery) of the vehicle B, and the front panel unit 14 attachable/detachable to/from the base unit 10 or cradle unit 12. The vehicle A and vehicle B are automobiles.

The navigation apparatus according to this embodiment is basically the combination of the base unit 10 and front panel unit 14. However, an application in which the front panel unit 14 is attached to the cradle unit 12 is also acceptable. As shown in FIG 4, the advantages of this apparatus can be enhanced if base units 10-1, 10-2, 10-3 ... or cradle units 12-1, 12-2, 12-3 ... are removably installed in associated vehicles A1, A2, A3 ... or B1, B2, B3 ..., and the user uses the apparatus after presetting the front panel unit 14 to his or her personal screen settings and switching it to correspond to the ID number of the associated base unit 10 or cradle unit 12.

The base unit 10 is equipped with a base unit case 10a having the overall shape of a box and internally accommodates a board or the like on which is mounted, inter alia, a microcomputer enabling operation of audio equipment of the vehicle A. The front of the base unit case 10a is formed to 2DIN (DIN: Deutsches Institut für Normung) size and has a recess 10b formed therein.

The front panel unit 14 is equipped with a plate-shaped front panel unit case 14a about the same size as or somewhat larger than the front of the base unit 10 and the front of the front panel unit case 14a is equipped with a liquid crystal panel (display) 14b for displaying map data and switches provided to be operable by the user (operator), including, for example, a destination input switch 14c and a current location input switch 14d. The liquid crystal panel 14b is provided with a touch panel capable of detecting points touched by the user (operator), as will explained later. Symbols 14e and 14f designate jacks for connecting an iPod (registered trademark) and analog audio equipment, respectively.

The front panel unit 14 is configured to be detachably mounted in a recessed part 10al and a recess 10b of the front of the base unit case 10a (to be freely attached and detached). Of the operations of the attach/detach mechanism, the mounting will be explained first. As shown in FIG. 2, the back of the front panel unit 14 is formed on the left side with two vertically spaced fixed claws 14g and on the right side with two vertically spaced movable catch slides 14h. Two vertically spaced movable lock levers 10c are provided on the right side of the recess 10b of the base unit 10, and two vertically spaced fixed claws 10d are formed on the left side, and when the front panel unit 14 is attached, they respectively engage with the fixed claws 14g and catch slides 14h of the front panel unit 14.

Note that in this specification the "vertical" direction is that on the vertical axis (gravitational axis) of the base unit 10, front panel unit 14 and the like in their condition as fastened to the vehicle A or B and the lateral direction is a direction perpendicular thereto.

As shown in FIG. 1, a connector 10e is provided in the recess 10b of the base unit 10. When attached to the base unit 10, the front panel unit 14 is supplied with operating power from the power supply (battery) of the vehicle A through the connector 10e and sent/received with data and control signals of various sensors, including a GPS signal receiver 20, AV equipment and the like therethrough. Among the electrical contacts of the connector 10e, the left and right electrical contacts are ground contacts.

Turning next to an explanation of the detachment, a detach button 14i is provided on the front panel unit 14 under the jacks 14e and 14f. When the front panel unit 14 is in the attached state with the base unit 10 and the user presses the detach button 14i, the resulting movement is transmitted to the lock levers 10c through a detach knob 10f provided in the base unit 10, whereby the lock levers 10c are moved outward to disengage them from the fixed claws.

The catch slides 14h on the right side of the front panel unit 14 are only urged outward (rightward in FIG. 2) by spring force to be engaged with the fixed claws 10d of the base unit 10. Therefore, if the engagement between the lock levers 10c and the fixed claws 14g on the left side is released and the user moves the front panel unit 14 (leftward in FIG. 1) by greater than the overlap span of the catch slides 14h and the fixed claws 10d, the engagement with the base unit 10 is released to enable detachment of the front panel unit 14 from the base unit 10.

As shown in FIG 1, a release lever 10g is provided in the recess 10b in the front of the base unit 10. When the front panel unit 14 is attached, the release lever 10g is urged in the direction of ejecting it by a kick lever loaded with a spring (neither shown). A panel unit detection switch (not shown) is attached to the release lever 10g and produces outputs or signals in response to the location of the release lever 10g, i.e., the attachment and detachment of the front panel unit 14; for example, produces an ON signal when the front panel unit 14 is attached and an OFF signal when it is detached.

As shown in FIGs. 2 and 3, the cradle unit 12 is detachably attached to the back of the front panel unit 14. The attach/detach mechanism between the front panel unit 14 and cradle unit 12 is not illustrated, but it is similar to the attach/detach mechanism between the front panel unit 14 and base unit 10 explained with reference to FIG. 1, and the front panel unit 14 is removably attached to the cradle unit 12 via lock levers, catch slides and so on. The cradle unit 12 is also equipped with a panel unit detection switch.

The cradle unit 12 is fastened to the dashboard of the vehicle B through a cradle unit attachment arm 16. The cradle unit 12 is equipped with a cradle unit case 12a that is shorter in height and greater (deeper) in depth than the front panel unit case 14a and internally accommodates, inter alia, a board on which a microcomputer and the like are mounted.

As shown FIG 5, the front panel unit 14 of the navigation apparatus according to this embodiment is either mounted near the driver's seat of the vehicle A or B, more exactly is installed in the base unit 10 (not visible in FIG. 5) built into the dashboard D, or installed on the dashboard D via the cradle unit 12. In either location, the front panel unit 14 is installed at a height near that of a windshield 18.

More concretely, when the front panel unit 14 is attached to the base unit 10, the longitudinal center line 14bc of the liquid crystal panel of the front panel unit 14 is, as viewed by the user (of average sitting height), slightly higher than the rotation center SWc of the steering wheel SW and considerably higher than the rotation center SHc of the steering shaft at the dashboard plane (substantially the front plane of the front panel unit 14), i.e., the rotation center SHc is located toward the undersurface of the front panel unit 14. Symbol SL designates a transmission shift lever.

As set out in the forgoing, the front panel unit 14 of the navigation apparatus according to this embodiment is configured to be attachable/detachable to/from the base unit 10 or cradle unit 12.

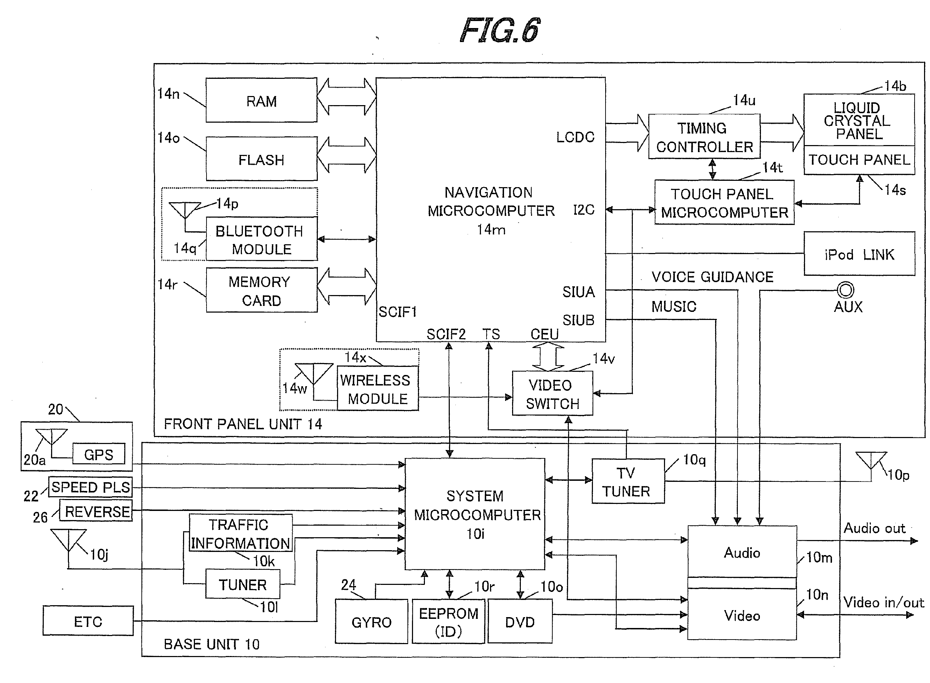

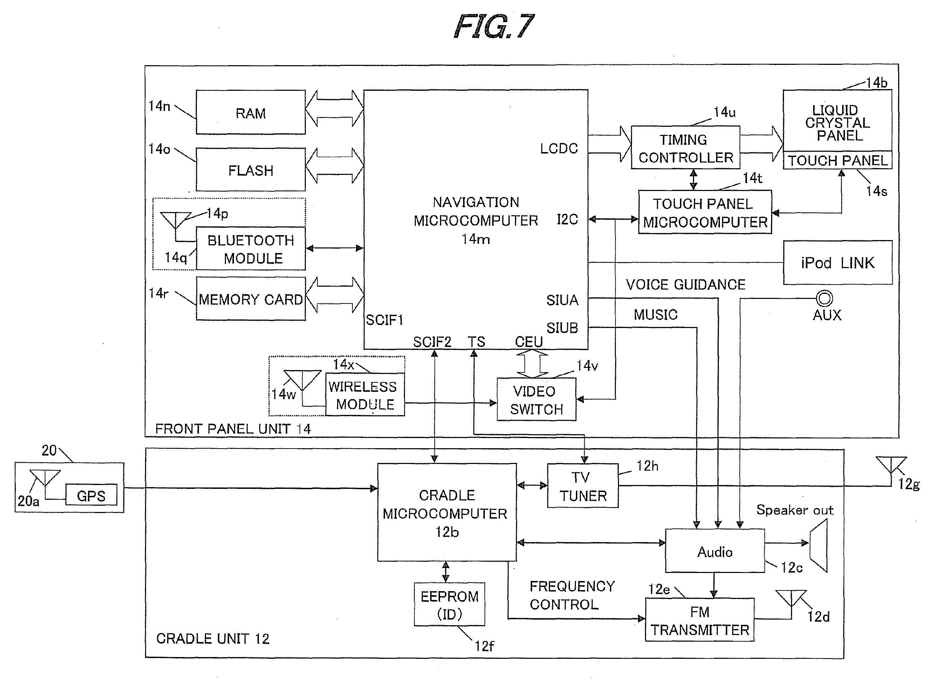

FIG. 6 is a block diagram showing the internal configuration of the front panel unit 14 and base unit 10, and FIG. 7 is a block diagram showing the internal configuration of the front panel unit 14 and cradle unit 12.

As shown in FIG. 6, the front panel unit 14 is equipped with a microcomputer (called the "navigation microcomputer") 14m and the base unit 10 is equipped with a microcomputer (called the "system microcomputer") 10i. Further, as shown in FIG. 7, the cradle unit 12 is equipped with a microcomputer (called the "cradle microcomputer") 12b. The navigation microcomputer 14m has several times greater processing capability than the system microcomputer 10i and cradle microcomputer 12b.

Continuing the explanation of FIG. 6, the base unit 10 equipped with the system microcomputer 10i is further equipped with a traffic information module (VICS) 10k for receiving traffic information via an antenna 1Oj attached to the vehicle A, a tuner 101 for receiving broadcast waves sent to onboard audio equipment (AM/FM radio etc.; not shown) of the vehicle A, an audio circuit block 10m for controlling the operation of the onboard audio equipment, a video circuit block 10n for displaying DVD and other images on the liquid crystal panel 14b of the front panel unit 14, a DVD module 10o for operating in intercommunication with the system microcomputer 10i, reading audio and image signals from a CD or DVD, demodulating the image signals and sending them to the video circuit block 10n as analog signals, a TV tuner 10q for receiving terrestrial digital broadcasts via an antenna 10p, and an EEPROM 10r comprising a nonvolatile memory.

The base unit 10 is further equipped with a GPS signal receiver (designated "GPS") 20 for receiving GPS (Global Positioning System) signals, a wheel speed sensor (designated "SPEED PLS") 22, a gyrosensor (designated "GYRO") 24 and a reverse gear switch (designated REVERSE) 26. The reverse gear switch 26 is connected to a transmission or a transmission shift lever 30 (FIG. 5).

The GPS signal receiver 20 is equipped with an antenna 20a which is attached at an appropriate location such as on the base unit case 10a, dashboard or meter visor. Note that when the front panel unit 14 is detached from the base unit 10 and attached to the cradle unit 12, the GPS signal receiver 20 uses an antenna attached at an appropriate location on the cradle unit case 12a or attachment arm 16.

The wheel speed sensor 22 is installed near the driveshaft (not shown) of the vehicle A and outputs a pulse signal every predetermined rotation angle of the driveshaft, i.e., wheels (tires) (in other words, it detects the rotational speed of the vehicle A wheels). The gyrosensor 24 is disposed inside the base unit case 10a and produces an output whose voltage varies with the angular velocity (yaw rate) about the gravity axis (vertical axis) at the center of gravity of the vehicle A (in other words, it detects the angular velocity (yaw rate) about the vertical axis, more specifically about the three axes X, Y and Z).

The gyrosensor 24 is enabled to experience the same vibration as the vehicle A by installing it on a suitable board in the interior of the base unit case 10a to be near edge or other board attachment screws, and since its sensitivity varies with attachment angle, the attachment angle is measured after attachment to the vehicle A and the measured value is stored in the EEPROM 10r as a correction value.

The reverse gear switch 26 installed at an appropriate location on the transmission (not shown) or shift lever 30 (shown in FIG. 5) of the vehicle A and outputs an ON signal when the reverse gear for backing up the vehicle A is engaged (ON) or the shift lever 30 is in the R position, i.e., when the vehicle A is about to back up.

The front panel unit 14 equipped with the navigation microcomputer 14m is further equipped with a RAM 14n, a FLASH memory 14o for storing map data and the like for navigation, a BT (Bluetooth) module 14q for transmitting and receiving 2.45 GHz radio waves to/from a mobile telephone hands-free microphone via an antenna 14p attached to the front panel unit case 14a, a memory card 14r, a touch panel 14s installed on the liquid crystal panel 14b, a touch panel microcomputer 14t for controlling the operation thereof, a timing controller 14u for generating various sync signals for liquid crystal display, a video switch 14v for performing input/output of the video circuit block 10n and the like of the base unit 10, and a wireless module 14x for wireless reception of image data from a rear camera in the same frequency band via an antenna 14w attached to the front panel unit case 14a.

To be more specific, the BT module (short-range transceiver module) 14q and wireless module (dedicated image data receiving module) 14x are installed on the back of the front panel unit case 14a.

In the configuration shown in FIG. 6, the signal receiver 20 that receives the GPS signals is installed on the base unit 10, and the location information acquired from the GPS signals is, along with the outputs of the wheel speed sensor 22, gyrosensor 24 and reverse gear switch 26, sorted into time-coincident data, integrated and sent to the navigation microcomputer 14m by the system microcomputer 10i.

After first acquiring the location of the vehicle A based on the GPS signals, the navigation microcomputer 14m corrects it based on the outputs of the wheel speed sensor 22 and the gyrosensor 24. Thus, the navigation microcomputer 14m determines the location of the vehicle A by autonomous navigation. The vehicle location determined by autonomous navigation is stored in the FLASH memory 14o and/or the EEPROM 10r at regular intervals, so that the current location can be estimated immediately after the engine of the vehicle A is started and power is turned ON.

Note that low-speed digital signals are sent and received between the system microcomputer 10i and the navigation microcomputer 14m over a signal line (serial data line), while image signals inputted through the TV tuner 10q are sent out to the front panel unit 14 over a separate data line as high-speed digital signals. In contrast, image signals inputted from the DVD module or exterior are inputted to the video circuit block 10n of the base unit 10 and thereafter sent over a signal line to the video switch 14v of the front panel unit 14 as analog signals. The video switch 14v sends its output to the navigation microcomputer 14m as a digital signal and also receives a control signal inputted from the navigation microcomputer 14m. In addition, the picture signal of the wireless module 14x is sent through the video switch 14v to the video circuit block 10n from where it can be sent through an external terminal to another video device for viewing, recording or the like.

Next, turning to an explanation of the internal structure of the cradle unit 12 with reference to FIG. 7, the cradle unit 12 equipped with the cradle microcomputer 12b is further equipped with an audio circuit block 12c for controlling audio input to a speaker built into the cradle unit 12, an FM transmitter 12e for radio wave transmission of the output of an audio module from an antenna 12d, an EEPROM 12f comprising a nonvolatile memory, and a TV tuner 12h for receiving terrestrial digital broadcasts via an antenna 12g.

Note that when the front panel unit 14 is detached from the base unit 10 and attached to the cradle unit 12 as set out above, the antenna 20a of the GPS signal receiver 20 used is that of the vehicle B.

The cradle microcomputer 12b sends the location information obtained from the GPS signals to the navigation microcomputer 14m of the front panel unit 14 and the navigation microcomputer 14m determines the location of the vehicle B based solely on the GPS signals.

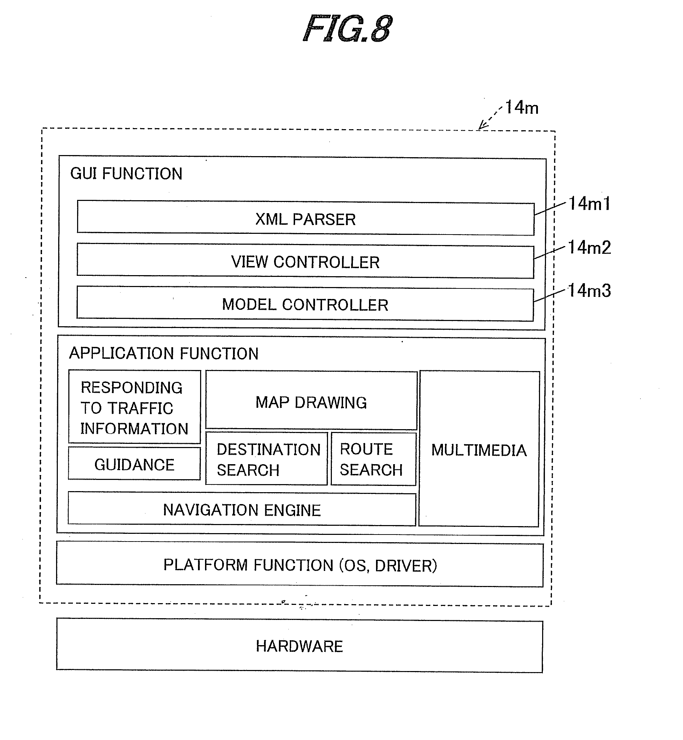

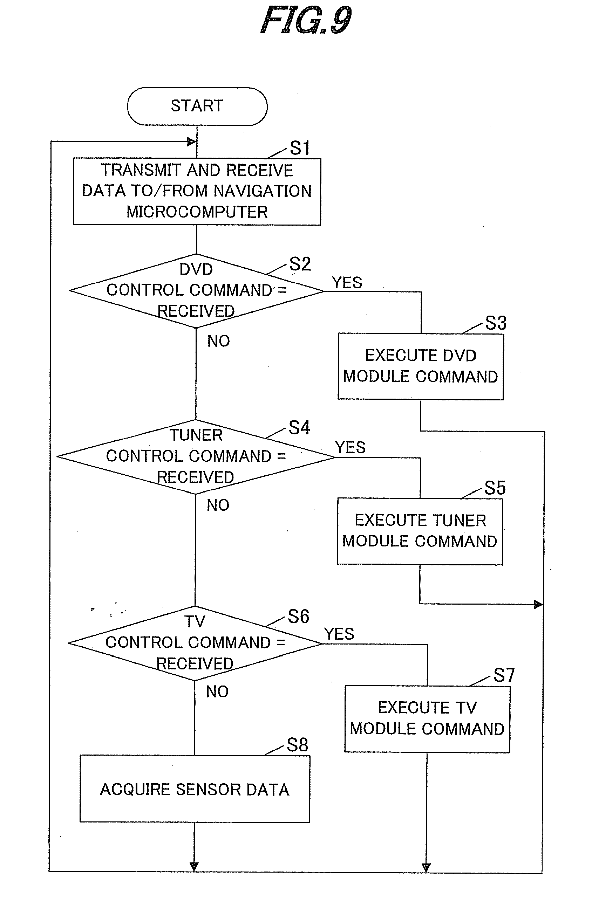

As regards the navigation microcomputer 14m and system microcomputer 10i shown in FIG. 6, the software configuration of the navigation microcomputer 14m is shown in FIG. 8 and the software configuration of the system microcomputer 10i is shown in FIG. 9.

In the case of operating equipment that, like a navigation apparatus, has many functions and many settings, use of a Graphical User Interface (hereinafter called "GUI") enables the user to visually understand the operating method. Taking this point into account, the navigation apparatus according to this embodiment incorporates into the navigation microcomputer 14m of the front panel unit 14 shown in FIG. 6 a configuration enabling GUI customization, whereby the functions are executed through the user's operation of the touch panel 14s.

Specifically, as shown in FIG. 8, the navigation microcomputer 14m is equipped with a GUI function for displaying a menu on the liquid crystal panel 14b and executing functions designated by having the user touch specified sites on the touch panel 14s, a function (application functions) for executing operations selected by the GUI function, a function (platform functions) for defining processing times for various functions and managing memory space, and a function (driver) for accessing individual peripheral devices (hardware). The GUI function comprises an XML parser 14ml, a VIEW controller 14m2 and a MODEL controller 14m3.

As mentioned earlier, the navigation microcomputer 14m supplies tuner and disk drive control commands to the system microcomputer 10i of the base unit 10 over the signal line (serial data line).

As shown in S1 to S8 of the flowchart in FIG. 9, on the base unit 10 side, the system microcomputer 10i receives commands from the navigation microcomputer 14m, controls peripheral devices, and conveys the information obtained from the devices and sensor data to the navigation microcomputer 14m over the serial data line. Although not shown in the drawings, in the cradle unit 12 the cradle microcomputer 12b performs similar processing to the system microcomputer 10i.

In addition, in the front panel unit 14, the navigation microcomputer 14m determines based on the sensor output condition whether the outputs of the three sensors or just the GPS signals of one sensor output should be used as the sensor(s) for determining the location of the vehicle.

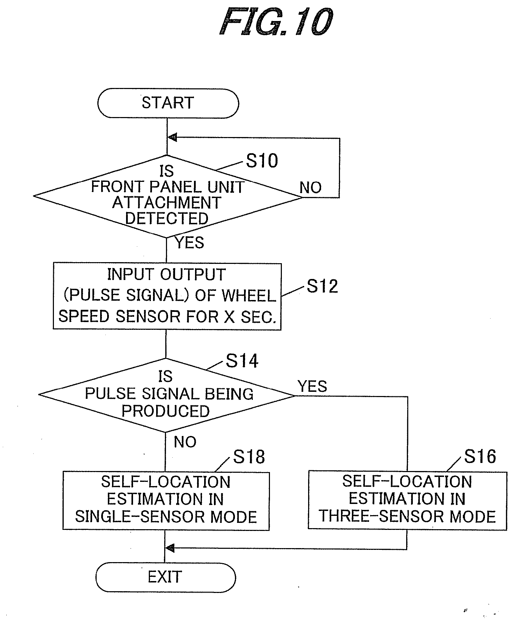

FIG. 10 is a flowchart showing this processing.

Now to explain, in S 10 it is checked whether attachment to the base unit 10 of the front panel unit 14 in which it itself is accommodated was detected. Since communication with the system microcomputer 10i through the signal line becomes possible upon attachment to the base unit 10, the navigation microcomputer 14m thereby judges whether its own attachment to the base unit 10 was detected.

When the result in S10 is YES, the program goes to S12, in which the output (pulse signal) of the wheel speed sensor 22 is inputted for X seconds (predetermined time period), e.g., 3 seconds, and the program goes to S 14, in which it is checked whether the pulse signal is being produced.

When the result in S14 is YES, the program goes to S16, in which self-location estimation is done in three-sensor mode, i.e., (vehicle A) self-location is determined from the outputs of three sensors (GPS signal receiver 20, wheel speed sensor 22 and the gyrosensor), and when the result in S14 is NO, the program goes to S18, in which self-location estimation is done in single-sensor mode, i.e., (vehicle A) self-location is determined from the output (GPS signals) of the GPS signal receiver 20.

For example, during driving on a congested road, the output of the wheel speed sensor 22 is sometimes not produced or becomes sporadic, but making the decision based on sensor output condition enables the sensor(s) used for location determination to be optimally selected to enhance the accuracy of vehicle location determination, while the flexibility of sensor use in location determination is improved in the point that the location determination is not necessarily restricted to use of three sensors.

Note that although in the processing of FIG. 10 the output of the wheel speed sensor 22 is checked by inputting it for X seconds, it is possible instead to check whether the output of the wheel speed sensor 22 exceeds a predetermined threshold value and select the single-sensor mode when it does not.

Moreover, in the front panel unit 14, in addition to conducting the processing of FIG. 10, the navigation microcomputer 14m recognizes from the information from the system microcomputer 10i or the cradle microcomputer 12b which is installed and determines whether self-location determination should be conducted using the outputs of the three sensors or just the GPS signals of one sensor output. Specifically, the navigation microcomputer 14m of the front panel unit 14 determines the sensor(s) (detector(s)) to be used for determining the location of the vehicle in accordance with the attached/detached condition of the front panel unit 14. The base unit 10 and cradle unit 12 are assigned respective ID numbers (identification numbers) that are stored in the nonvolatile EEPROMs 10r and 12f.

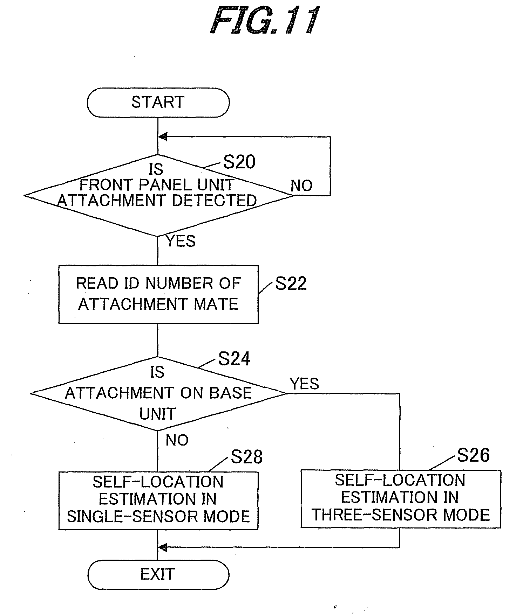

FIG. 11 is a flowchart showing this processing, which, as in the case of FIG. 10, is executed by the navigation microcomputer 14m.

Now to explain, in S20 it is checked whether attachment of the front panel unit 14 in which it itself is accommodated was detected. Since communication with the system microcomputer 10i or the cradle microcomputer 12b through the signal line becomes possible upon attachment, the navigation microcomputer 14m thereby judges whether its own attachment in the base unit 10 was detected.

When the result in S20 is YES, the program goes to S22, in which the ID number (identification number) of the attachment mate (mounting mate) is read, to S24, in which it is checked whether the attachment was on the base unit 10, and when the result is YES, to S26, in which self-location estimation is done in three-sensor mode, i.e., (vehicle A) self-location is determined from the outputs of three sensors (GPS signal receiver 20, wheel speed sensor 22 and the gyrosensor).

When the result in S24 is NO, it means that the attachment was on the cradle unit 12, so the program goes to S28, in which self-location estimation is done in single-sensor mode, i.e., (vehicle B) self-location is determined from the output (GPS signals) of the GPS signal receiver 20.

Thus, a configuration is adopted that determines the sensor(s) to be used in determining the location of the vehicle A or B in accordance with the attached/detached condition of the front panel unit 14, thereby making it possible to improve the flexibility of sensor use in location determination.

Next, the storage of the vehicle location will be explained.

As set out in the foregoing, multiple base units, e.g., base units 10-1, 10-2, 10-3 ..., are sometimes provided, but in such a case, it is possible that the location data of the vehicle A stored in the nonvolatile memory (FLASH memory 14o) in the front panel unit 14 is data of another vehicle, i.e., of the vehicle A2, A3 or the like. As a result, cases arises in which there is no choice but to confirm by receiving GPS signals and determining the location after mounting.

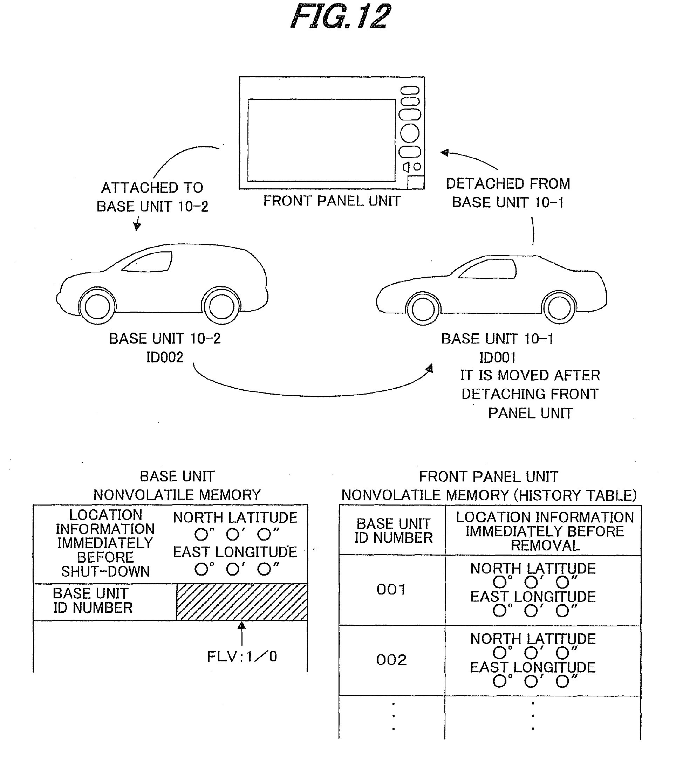

Therefore, in the navigation apparatus according to this embodiment, when multiple base units 10 are provided, the location information immediately before removal and the ID number are together stored in the EEPROM (nonvolatile memory) 10r of the base unit 10, as shown at the left of FIG. 12. On the other hand, as shown at the right of FIG. 12, when the front panel unit 14 is detached from the base unit 10, the ID number of the base unit and the location data are stored as a pair, and when the front panel unit 14 is attached to the same base unit again, the location information at the time of detachment is read from that ID number and used as the location information. This makes it possible to prevent use of wrong location information.

Further, irrespective whether there is a single or multiple base units 10, if the front panel unit 14 should be detached and attached again after the vehicle A has moved, cases may arise in which the current location and the location information stored in the front panel unit 14 differ.

Therefore, in conducting the processing in the navigation apparatus according to this embodiment, a flag FLV indicating that the vehicle A moved while the front panel unit 14 was detached is included in the EEPROM 10r of the base unit 10.

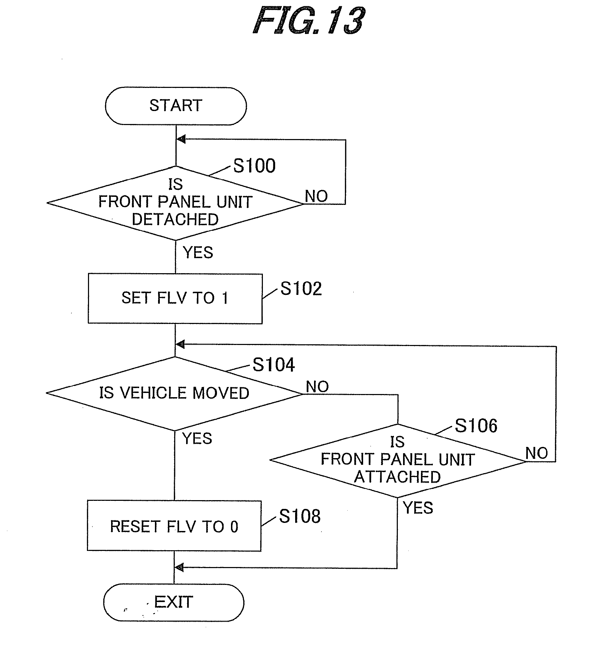

FIG. 13 is a flowchart showing this processing. The illustrated processing is executed by the system microcomputer 10i.

Now to explain, in S100, it is checked whether the front panel unit 14 was detached. This is judged from the output of the panel detection switch. When the result in S 100 is YES, the program goes to S 102, in which the bit of the flag FLV is set to 1, and to S104, in which it is checked whether the vehicle has moved. This is judged from the output of the wheel speed sensor 22.

When the result in S104 is NO, the program goes to S 106, in which it is checked whether the front panel unit 14 was attached again, and when the result is NO, returns to S 104. On the other hand, when the result in S 104 is YES, the program goes to S 108, in which the bit of the flag FLV is reset to 0. Note that when the result in S 104 is NO and the result in the ensuing S 106 is YES, S108 is skipped because, at any rate, the vehicle has not moved.

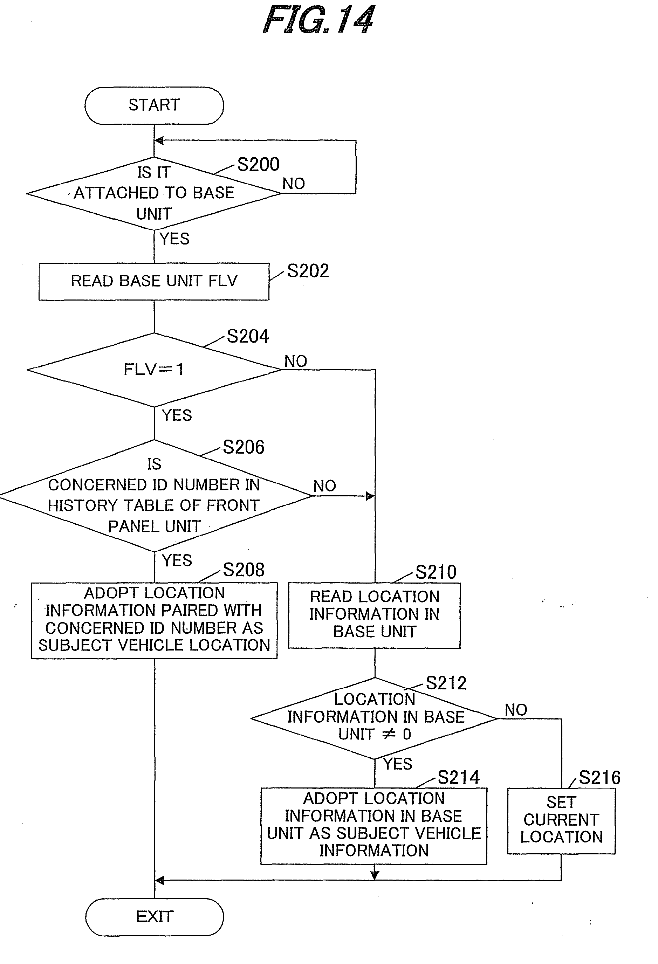

FIG. 14 is a flowchart showing the processing executed by the navigation microcomputer 14m responsive to the processing of FIG. 13.

Now to explain, in S200, whether or not attached to the base unit 10 is continuously checked based on the output of the panel detection switch, and when the result is YES, the program goes to S202, in which the flag FLV stored in the EEPROM 10r of the base unit 10 is read, and to S204, in which it is checked whether the bit of the flag FLV is set to 1.

When the result in S204 is YES, it means that the vehicle has not moved, so the program goes to S206, in which it is checked whether the ID number of the base unit 10 concerned is in a history table (shown in FIG. 12), and when the result is YES, to S208, in which the location information paired with the ID number concerned is adopted as the subject vehicle location.

On the other hand, when the result in S204 is NO, the program goes to S210, in which the location information stored in the base unit 10 is read. The same applies when the result in S206 is NO. Next, in S212, it is checked whether the read information is not 0 data, and when the result is YES, the program goes to S214, in which the read information is adopted as the subject vehicle location, and when it is NO, the program goes to S216, in which current location setting is conducted (described later).

Specifically, after the front panel unit 14 is detached, the system microcomputer 10i of the base unit 10 writes the location information contained in the GPS signals and the mounted vehicle orientation information to the EEPROM 10r every time the power is turned OFF. When GPS location determination is not complete at this time, it writes 0 data.

In the front panel unit 14, when, after the installation in the base unit 10, the navigation microcomputer 14m determines by referring to the flag FLV that the location information stored therein is unusable, it reads the location information stored in the base unit 10 and, provided that it is not 0 data, adopts it as the subject vehicle location (S204, S210, S212, and S214). Therefore, even when the once-detached front panel unit 14 is reattached after the vehicle has moved, it can nevertheless function as a navigation apparatus that indicates the subject vehicle location.

However, in even such a case, it will be impossible at some locations, such as in an underground parking lot, to acquire GPS signals upon attachment of the front panel unit 14, leaving no choice other than to adopt 0 data for the subject vehicle location. When the subject vehicle location is lost, it is impossible to calculate a route to the destination or to predict the arrival time or the like.

So, in the navigation apparatus according to this embodiment, it is made possible in the case where the subject vehicle location was lost, and only in such case, to set the subject vehicle location in the same manner as setting a destination (S216). Specifically, the user is allowed to define the subject vehicle location by selecting it from address search results or nearby landmark information, thereby enabling destination setting, route calculation and the like.

After this, the user cannot be offered guidance until GPS signals are received and the location is determined while driving on a road, but once GPS signals are picked up, that location can be used as the subject vehicle location to guide the user by autonomous navigation.

Next, navigation information storage and information sharing between base units will be explained.

In a navigation apparatus, the practice in determining self-location is to use vehicle-specific parameters. Namely, since the sensitivity of the gyrosensor 24 varies with attachment condition, the angle at the time of attachment is measured and stored in memory and sensor output is corrected using the stored value during navigation.

In the autonomous navigation, the calculation of traveled distance uses the distance traveled during one pulse output by the wheel speed sensor 22 (Distance Per Pulse). This DPP is calculated from the traveled trajectory derived from the GPS signals and the number of wheel speed sensor 22 pulses and is constantly updated.

Since the attachment angle of the gyrosensor 24 and the traveled distance DPP are parameters specific to the vehicle in which the navigation apparatus is installed, this embodiment stores these parameters in the EEPROM 10r of the base unit 10. In this arrangement, if the user replaces only the base unit 10 with a new one, such information must be once saved to a memory card or the like and then copied to the new base unit 10.

Taking this point into account, the navigation apparatus according to this embodiment once saves the information (parameters) stored in the EEPROM 10r of the base unit 10 to the front panel unit 14 side and copies it to the new base unit 10 in accordance with the instructions of the navigation microcomputer 14m. As a result, the information can be shared when the base unit is replaced.

Next, explanation will be made regarding interference between wireless modules and the like, i.e., the device priority and the like.

In the navigation apparatus according to this embodiment, since the front panel unit 14 is equipped with two wireless modules, i.e., the BT module 14q and the wireless module 14x, interference is liable to occur between the two. For example, when the vehicle is backing up (when rear camera images are being displayed), if a DVD playback request is made or the mobile telephone with hands-free microphone receives a call, device operations may interfere.

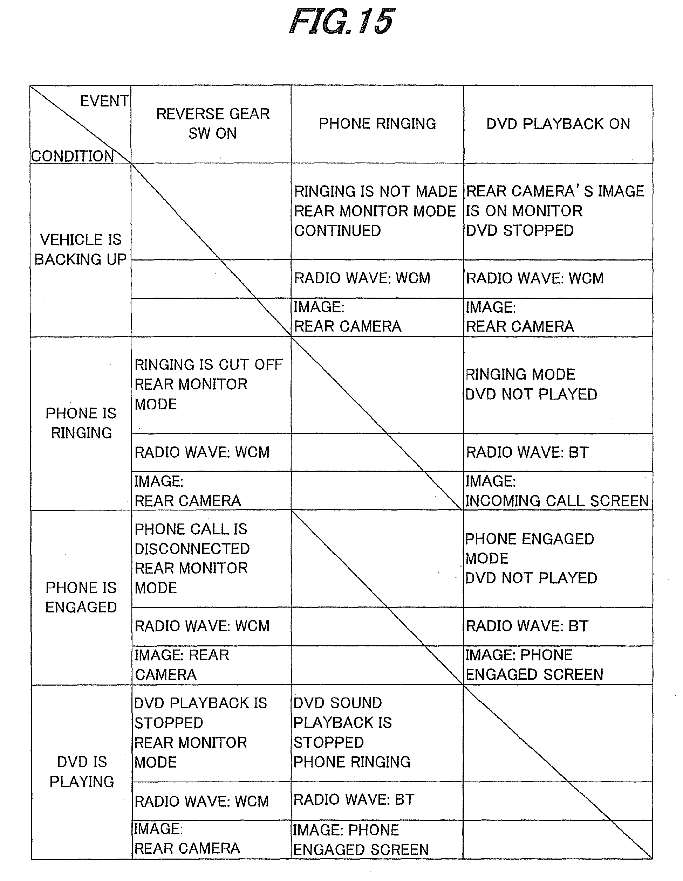

So priority is established and the devices are operated accordingly. FIG. 15 is an explanatory diagram of this processing. In this diagram, events, i.e., operations of the reverse gear switch 26, mobile telephone with hands-free microphone and the DVD, are represented on the horizontal axis, and associated states, i.e., vehicle backing up, phone engaged, and DVD playing, are represented on the vertical axis.

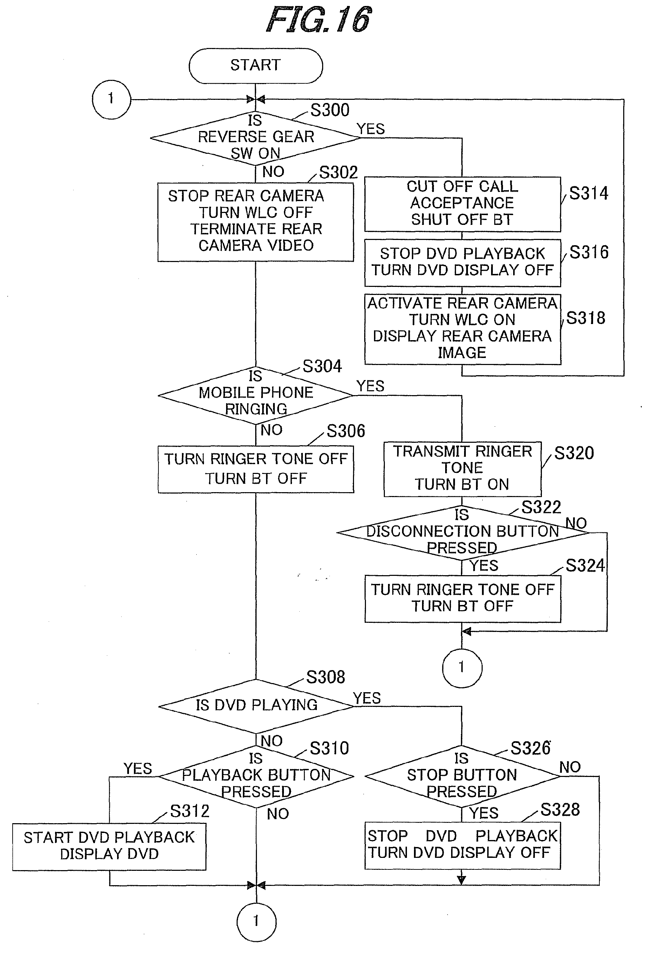

FIG. 16 is a flowchart showing processing executed by the navigation microcomputer 14m based on FIG 15.

Turning to an explanation in line with FIG. 16 made with reference to FIG. 15, first, in S300, it is checked whether the reverse gear switch 26 is outputting an ON signal, i.e. whether the vehicle is about to back up, and when the result is NO, the program goes to S302, in which the operation of the rear camera (Wireless Camera) is stopped, the WLC (Wireless Camera) wireless function is turned OFF, and the video from the rear camera is terminated.

Next, in S304, it is checked whether the mobile phone is engaged (ringing), and when the result NO, the program goes to S306, in which the ringer function of the hands-free system is turned OFF and the function of the BT module 14q is turned OFF (i.e., put in standby mode).

Next, in S308, it is checked whether the DVD is playing, and when the result is NO, the program goes to S310, in which it is checked whether the playback button (on the touch panel 14s) is pressed, and when the result is YES, goes to S312, in which DVD playback is started and DVD video is displayed on the liquid crystal panel 14b. This is because the vehicle is not about to back up, so rear camera images are unnecessary.

On the other hand, when the result in S300 is YES, the program goes to S314, in which mobile telephone call acceptance (ringing) is cut off and the BT module 14q is shut off because it is also unnecessary (i.e., wireless signal send/receive is discontinued; note that power shutdown is acceptable as the means for this). Next, in S316, DVD playback is stopped and DVD display is turned OFF, whereafter the program goes to S318, in which the rear camera is activated, the WLC function is turned ON and rear camera images are displayed, upon which the program returns to S300.

Further, when the result in S304 is YES, the program goes to S320, in which the ringer tone is transmitted through the onboard speaker and the BT module 14q for audio send/receive is turned ON (i.e., is activated). Next, in S322, it is checked whether the disconnect button (on the touch panel 14s) is pressed, and when the result is YES, the program goes to S324, in which the ringer tone is turned OFF and the BT module 14q is turned OFF because it is unnecessary. Note that when the result in S322 is NO, S324 is skipped.

Further, when the result in S308 is YES, the program goes to S326, in which it is checked whether the stop button (on the touch panel 14s) is pressed, and when the result is YES, it goes to S328, in which DVD playback is stopped and the DVD display is turned OFF. Note that when the result in S326 is NO, S328 is skipped.

Owing to the processing shown in FIGs. 15 and 16, display of the rear camera images taken rearward of the vehicle A is ensured, so that the user can back up while watching them. Further, device operation does not interfere.

Next, the FM transmitter 12e of the cradle unit 12 will be explained.

The FM transmitter 12e in the cradle unit 12 shown in FIG. 7 is a means that operates using the navigation microcomputer 14m to transmit the music contents or voice guidance in the memory card 14r of the front panel unit 14 over the onboard speaker. However, the output level of radio wave transmitters is regulated by the radio laws and regulations of individual countries, which makes transmission at weak power inevitable. Therefore, when driving near a radio station, noise occurs owing to the effect of its radio waves.

Therefore, in the navigation apparatus according to this embodiment, a database of local radio station frequencies is stored in the EEPROM 12f of the cradle unit 12, and the cradle microcomputer 12b finds a vacant frequency for the respective travel segments, or for the entire travel route to the destination, and displays the frequency on the liquid crystal panel 14b of the front panel unit 14.

If the user tunes the frequency of the car receiver (car audio) thereto, music contents or voice guidance can be outputted from the onboard speaker for listening. This makes it possible to offer the user the music contents or voice guidance with minimal noise. The cradle microcomputer 12b outputs the music contents and voice guidance through the FM transmitter 12e to output it from the onboard speaker.

Note that while the FM transmitter installed in the cradle unit 12 in this embodiment, it is also acceptable to provide it in the base unit 10.

Next, the GUI shown in FIG. 8 will be explained further.

As was explained regarding FIG 8, in the case of operating equipment that, like a navigation apparatus, has many functions and many settings, use of the GUI enables the user to visually understand the operating method, and therefore, the navigation apparatus according to this embodiment incorporates into the navigation microcomputer 14m of the front panel unit 14 shown in FIG. 6 a configuration enabling GUI customization, whereby the functions are executed through the user's operation of the touch panel 14s.

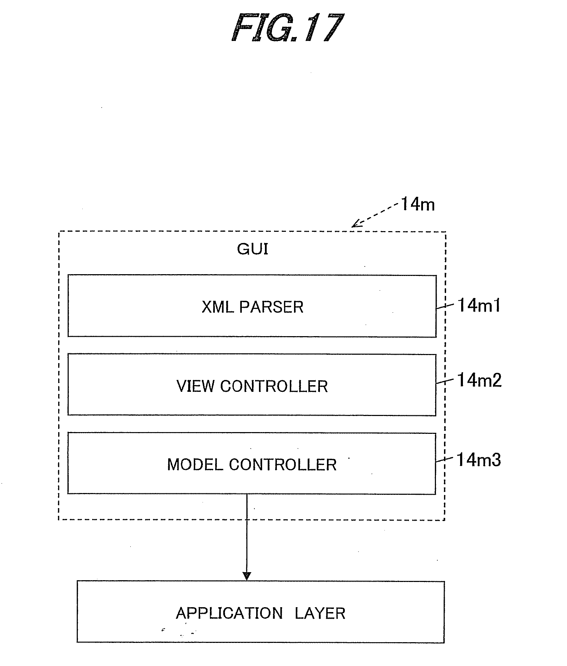

The configuration of the GUI (functions) of FIG. 8 is shown in FIG. 17. Turning once again to the explanation of the GUI, the parser 14ml defines the screen configuration, specifically it defines the button locations, button file names, button names and the like, and detects button touches. The VIEW controller 14m2 defines the menu configuration, i.e., it determines which skin to display when a button is pressed. The MODEL controller 14m3 sends the selected function message to the application layer. The application layer executes commands sent from the GUI.

While configuring in the manner shown in FIG. 17 enables the user to visually understand the operating method, the number of menus increases with increasing number of functions, with the result that the menu hierarchy becomes deeper.
Therefore, in order to execute a function, the user has to select menu buttons many times to select a desired function, which is rather liable to be more complicated. From the user's viewpoint, more narrowed down functions may be easier to use.

The menu screen is composed of skin files defining screen configurations prepared for the individual screens (background file name, button display location, button file name, button name and the like) and the messages issued when the individual buttons are selected, and bitmap files prepared for the individual constituent elements (menu buttons) of the menu screens called from skin files. These skin files and bitmap files are stored in the nonvolatile memory (FLASH memory) 14o, and the navigation microcomputer 14m displays them on the liquid crystal panel 14b utilizing the XML parser function.

The XML parser 14ml sends a message to the VIEW controller 14m2 in response to a user operation. The VIEW controller 14m2 examines the message contents, switches the displayed skin file, and, if necessary, sends a command request to the MODEL controller 14m3. The MODEL controller 14m3 checks the requested command and sends an operation command to the application layer. In this structure, switching the skin file changes the menu screen. The skin files are written in XML or other such language.

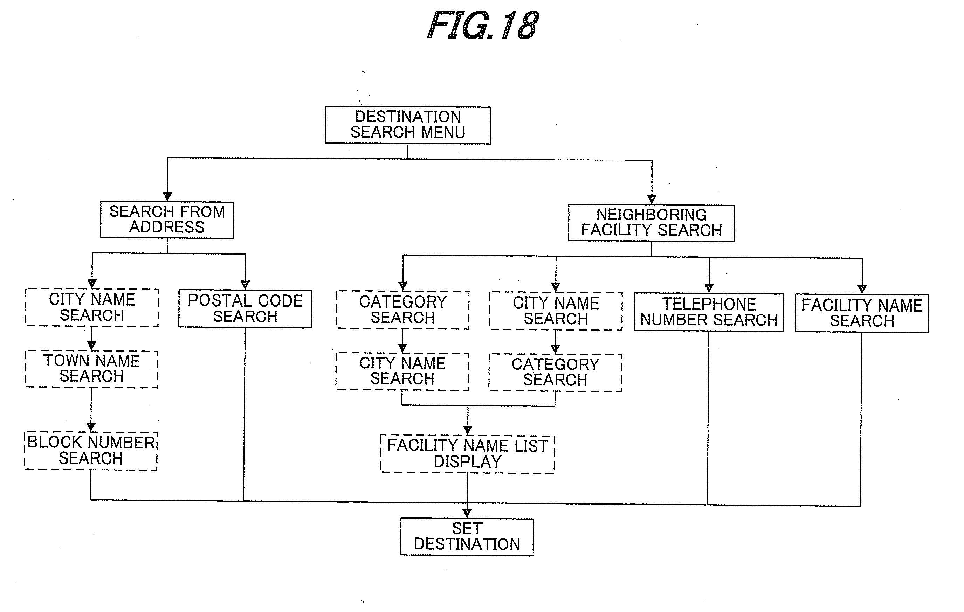

When customizing the GUI, the practice is to compile skins and controllers in a menu configuration composed of all original functions, then compile skin files without the keys desired to be deleted from the menu screen and thereafter replace the skin files concerned. This makes it possible to disable the display of menus and issuance of application commands at and below the deleted buttons and to delete their functions. An example thereof is shown in FIG. 18 (deleted portions are indicated in broken lines).

Further, when the skin files are written in a language such as XML, the button layout and button shapes can be modified simply by changing the skin file description. Adopting this method makes customization possible simply by replacing the skin files, without need to rewrite the program.

The original skin files are loaded into nonvolatile memory and the skin files desired to be changed are put in the memory card 14r or the like. The user puts the desired skin files in the memory card 14r, and after turning on the power, replaces skins by selecting files in the memory card 14r using the initial settings skin select menu. In this case, however, the user must select the preferred skin(s) at every power-on, so that setting becomes necessary every time the vehicle engine is turned off. Conversely, if the skins are fixed, only a particular user can benefit from the skin change.

The navigation apparatus according to this embodiment is configured so that each of the front panel unit 14, base unit 10 and cradle unit 12 includes a nonvolatile memory and a microcomputer, and the memories store unique ID numbers by which they authenticate one another at the attachment process. In other words, the respective microcomputers can each identify the other at the time of attachment. Further, since the base unit 10 and cradle unit 12 are fastened to the vehicle, the front panel unit 14 can also identify the vehicle on which it itself is attached based on the ID number.

In view of the recent tendency for each person to own his or her own car and for every car to have one particular user, a situation is likely to arise in which the base unit 10 or the cradle unit 12 is installed in every car and only a single front panel unit 14 is kept on hand for shared use. So skin file names are in advance defined in the single front panel unit 14 in correspondence to the ID numbers of the base units 10 and cradle units 12 in which attachment is expected, the ID number of the mate is read at mounting, and changeover of the skin files in the memory card 14r is done automatically.

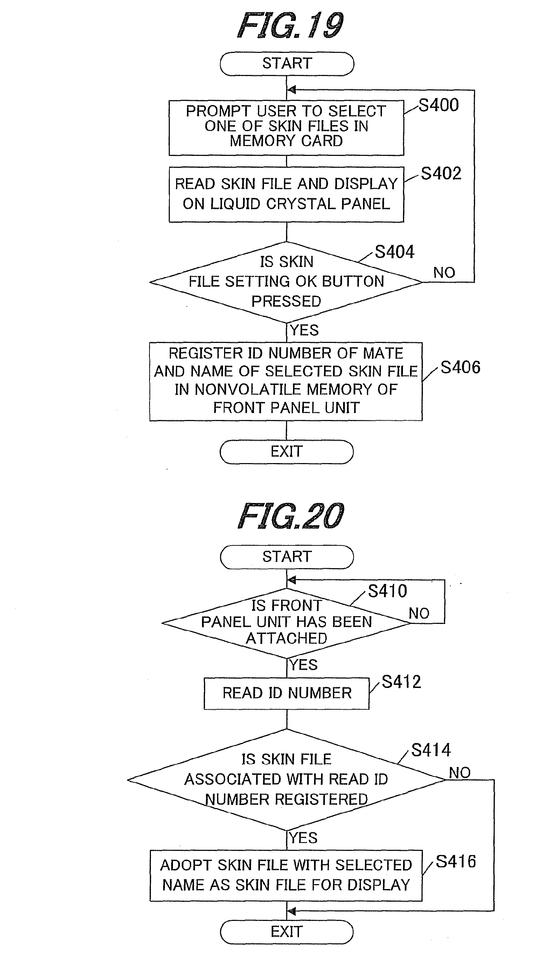

FIGs. 19 and 20 are flowcharts showing this processing. The processing shown is executed by the navigation microcomputer 14m.

The processing shown in FIG. 19 is premised on multiple types of skin files being stored in the memory card 14r of the navigation microcomputer 14m of the front panel unit 14, and is executed in response to operation by the individual users of multiple vehicles when the front panel unit 14 is attached to the base unit 10 or cradle unit 12.

Now to explain, in S400, the user is prompted to select one of the multiple types of skin files stored in the memory card 14r, whereafter the program goes to S402, in which the selected skin file is read and displayed on the liquid crystal panel 14b. Next, the program goes to S404, in which it is checked whether the user pressed the skin file setting OK button, thereby confirming whether the user accepts the setting, and when the result is NO, the program returns to S400.

On the other hand, when the result is YES in S404, the program goes to S406, in which the ID number of the mate, i.e. of the base unit 10 or cradle unit 12 of the vehicle owned by the user who initiated the operation, is inputted, and the inputted ID number and name of the selected skin file are registered (stored) in the nonvolatile (FLASH) memory 14o of the front panel unit 14.

Note that in this case registration (storage) in the EEPROM 10r in the base unit 10 or the EEPROM 12f in the cradle unit 12, or in a separately provided nonvolatile memory, is also applicable.

Moreover, it is also possible to enhance the reliability of the apparatus by, in addition to providing the front panel unit 14 with the separate nonvolatile memory, also providing the base unit 10 or cradle unit 12 with a nonvolatile memory, registering (storing) the ID number of the mate, the selected skin file, the name thereof and the like in both nonvolatile memories, and when one set of data cannot be used or is not correct, using the data on the side that is not abnormal, and when both are abnormal or their data are different, preferentially using the data of the nonvolatile memory of the front panel unit 14.

The processing shown in FIG. 20 is executed when, following completion of the processing shown in FIG. 19, the detached front panel unit 14 is attached to the base unit 10 or cradle unit 12.

Now to explain, in S410, the fact of the front panel unit 14 having been attached to the base unit 10 or cradle unit 12 is confirmed, whereafter the program goes to S412, in which the ID number of the mate (the base unit 10 or cradle unit 12) in which the front panel unit is attached is read, and to S414, in which it is checked whether a skin file with a name associated with the read ID number is registered. When the result in S414 is NO, the remaining processing step is skipped, and when it is YES, the program goes to S416, in which the skin file with the selected name stored in the memory card 14r is adopted as the skin file for display, more exactly, is automatically selected.

This allows automatic switching of the skin file by the user to match the vehicle upon mounting. Since, however, it is of course possible to imagine a case in which every car does not have its own particular user, the menu is always provided with a button for switching to the original menu.

Although the GUI change procedure presumes user selection from among a number of GUIs prepared beforehand, it is also conceivable for users themselves to customize the GUI. In such case, the menu organization procedure will involve selection of a button not in use, so that there is a risk of inadvertently deleting a required button.

Therefore, this embodiment is configured so that each button is assigned a non-erasable attribute in the button delete procedure, and the attribute is unfailingly checked in the delete-button selection step, thereby making it impossible to delete buttons that must not be deleted. Further, frequently used and functionally indispensable buttons known to be undeletable from the start are assigned hard keys so they will not be displayed during menu editing.

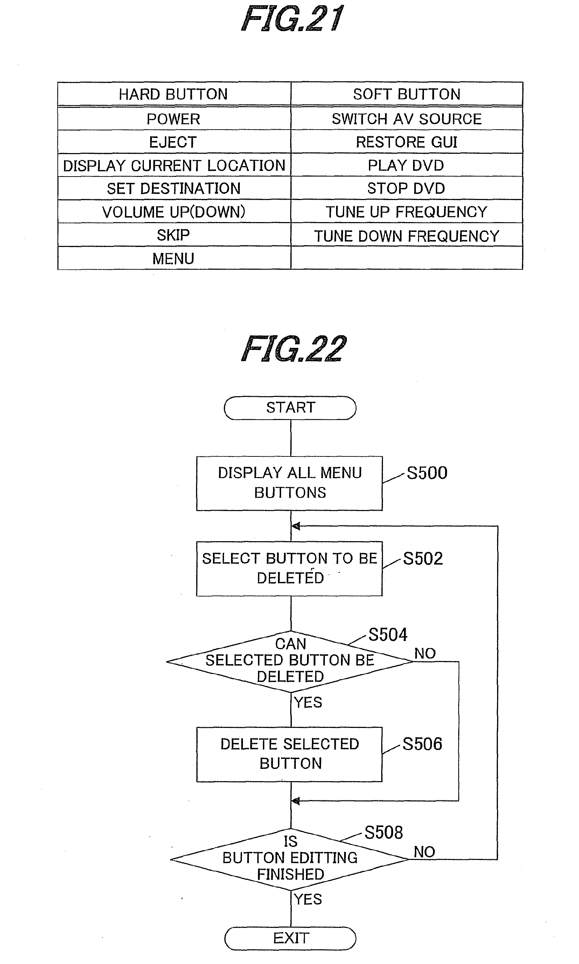

FIG. 21 shows examples of buttons that must not be deleted (undeletable buttons). FIG. 22 is a flowchart of the foregoing.

Now to explain, all menu buttons are displayed in S500 and the program goes to S502 in which the user is asked to select a button to be deleted. The program then goes to S504, in which it is checked whether the selected button can be deleted, and when the result is YES, to S506, in which the selected button is deleted. Note that when the result in S504 is NO, the processing of S506 is skipped.

Next, the program goes to S508, in which it is checked whether the button editing is finished, and when the result is NO, the program returns to S502, and when it is YES, the program is terminated. To be more specific, after the processing for each button deletion is completed, the message "Quit button editing?" is displayed along with YES and NO buttons, and when the NO button is pressed by the user, the result in S508 is NO and the program returns S502, and when the YES button is pressed, the result in S508 is YES and the program closes.

Owing to the foregoing configuration, the operation becomes easy for the user because the use of the GUI gives the user a visual understanding of the operation method, and user operation can be made still easier by narrowing down the menu buttons as required. Further, even when users customize the GUI on their own, they do not end up inadvertently deleting necessary buttons.

Next, explanation will be made regarding the installation site of the TV tuner 10q.

When TV viewing functions are incorporated in the navigation apparatus, use needs to be restricted. In the case where the TV viewing functions are all centralized in the front panel unit 14, the practice would be to send the output of the wheel speed sensor 22 for discriminating whether the vehicle is actually driving from the base unit 10 to the navigation microcomputer 14m and for the navigation microcomputer 14m to use it to turn the TV viewing functions ON and OFF.

However, in such a configuration, if the signal line (serial data line) interconnecting the base unit 10 and front panel unit 14 should be hacked and a pseudo signal sent to the front panel unit 14, the turned-off TV viewing function would be turned on.

In the navigation apparatus according to this embodiment, should the TV tuner 10q be installed in the front panel unit 14, the image signal received by the vehicle outside antenna would routed through the base unit 10 to the front panel unit 14. In this case, it would not be possible to obtain an image signal of good quality because the broadcast waves acquired from the antenna, being high in frequency and weak, are easily affected by the impedance of the path and ambient noise. In particular, owing to the connection of the front panel unit 14 and the base unit 10 through the connector 10e, the image signal is affected also by occurrence of contact loss.

Further, if a TV antenna should be installed directly on the front panel unit 14 in the condition being attached to the base unit 10, the antenna would have to be attached to an externally exposed component, so that the size of the liquid crystal panel (display) 14b would have to be reduced.

Taking these points into consideration, the TV tuner 10q of the navigation apparatus in accordance with this embodiment is installed in the base unit 10 as shown in FIG. 6. Specifically, since the system microcomputer 10i of the base unit 10 receives the output of the wheel speed sensor 22, whether the vehicle is driving can be easily determined, the operation of the TV tuner 10q can be restricted when driving is found to be in progress, a stable picture can be obtained, and size reduction of the liquid crystal panel 14b can be avoided.

In other words, since the determination of whether the vehicle is driving and the restriction of TV tuner 10q operation are completed inside the base unit 10, it becomes difficult to disable the TV view restriction by hacking from the outside.

Further, the effect of path impedance and noise can be mitigated to enhance picture quality by transferring the image signal to the front panel unit 14 after converting it to a digital signal in the TV tuner 10q.

Next, explanation will be made regarding theft of the front panel unit 14.

The front panel unit 14 is detachable from the base unit 10 and therefore susceptible to theft. Therefore, in this embodiment, theft of the front panel unit 14 is deterred by registering in the EEPROM 10r of the base unit 10 and the EEPROM 12f of the cradle unit 12 their ID numbers (identification numbers) and checking whether they agree therewith.

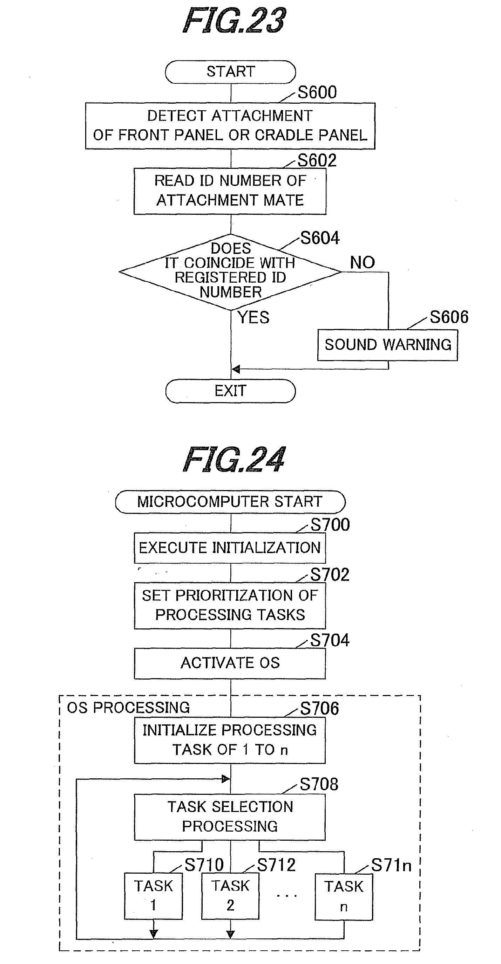

FIG. 23 is a flowchart of this processing showing processing executed by the navigation microcomputer 14m.

Now to explain, in S600, it is checked whether attachment of the front panel unit 14 in which it itself is accommodated was detected. Since communication with the system microcomputer 10i or the cradle microcomputer 12b through the signal line becomes possible upon attachment, the navigation microcomputer 14m thereby judges whether its own attachment was detected.

Next, the program goes to S602, in which the ID number (identification number) of the attachment mate (mounting mate) is read, to S604, in which it is checked whether it coincides with the ID number registered in advance, skips the remaining processing step when the result is YES, and when it is NO, goes to S606, in which it sounds a warning. Note that simultaneously with or instead of this, current location information is automatically notified to a previously designated telephone number through the BT module 14q.

While the microcomputer (navigation microcomputer) 14m does the processing of FIG. 23 discussed above, the navigation microcomputer 14m also executes various other processing such as the processing shown FIG. 10. And the system microcomputer 10i of the base unit 10 executes processing such as that shown in FIG. 13. The same is true of the cradle microcomputer 12b of the cradle unit 12.

The processing by these microcomputers will explained hereinafter with reference to FIGs. 24 to 26.

FIG. 24 is a flowchart showing a main routine for conducting the aforesaid processing by these microcomputers, namely, the navigation microcomputer 14m, system microcomputer 10i and cradle microcomputer 12b, e.g., the processing (hereinafter called "processing task") shown in FIG. 10 etc. conducted by the navigation microcomputer 14m.

The illustrated routine starts when the ignition key is turned ON to supply operating power from the vehicle A (or vehicle B) power supply (battery), whereupon initialization is executed first (S700) and the prioritization of 1 to n processing tasks is set in a predetermined RAM area (S702).

Next, the OS (operating system) is activated (S704), all processing tasks are initialized (S706), and standby mode is entered in a task selection step (S708). In this standby mode, when an event flag is set by an interrupt explained later, the event corresponding to the set event flag (one of S710 to S71n) is executed. When the processing of the corresponding event is finished, the routine returns to the task selection processing (S708), in which the standby mode is maintained until an event flag is set by the next interrupt.

Specifically, in the task selection step (S708), whether or not an event flag has been set is monitored through the interrupt processing (explained later), and when setting is detected, the processing task corresponding to the set event flag is executed. Note that when interrupts conflict, processing tasks are executed in accordance with the priority set in S702. The processing from initialization (S706) to event (one of S710 to S71n) corresponds to OS processing.

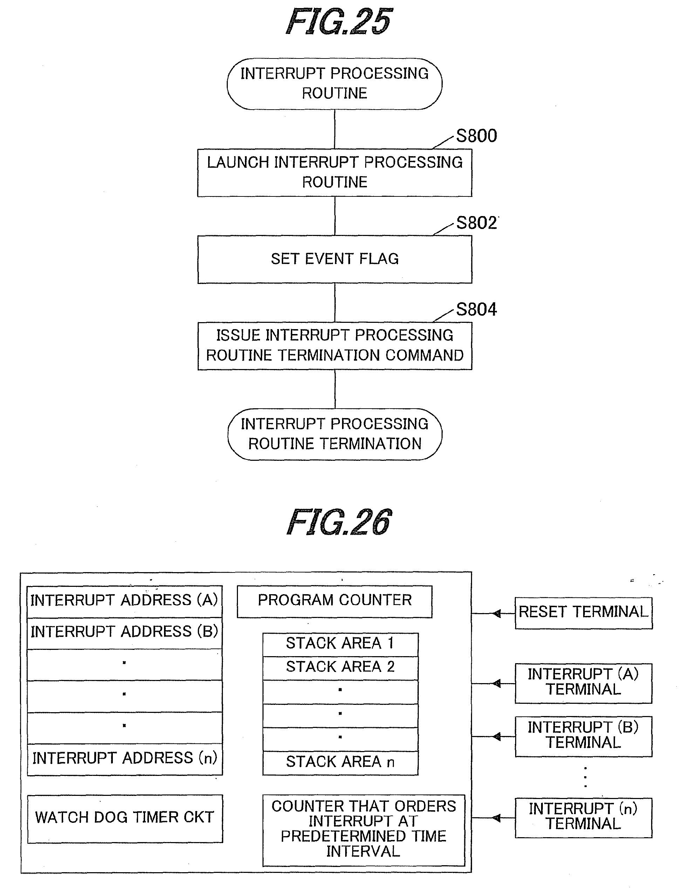

FIG. 25 is a flowchart showing the aforesaid interrupt processing routine and FIG. 26 is a block diagram showing the hardware configuration of the microcomputers used for the interrupt processing.

Broadly divided, the interrupt processing consists of a hardware-based processing portion independently processed with no relationship to software later loaded into the microcomputer and an interrupt processing routine portion that is software loaded into the individual microcomputers, and when data or a trigger signal is inputted to an interrupt terminal (A to n) of FIG. 26, or a trigger signal is produced in a counter that orders interrupts at predetermined time intervals, the aforesaid hardware-based processing is commenced in the microcomputer, and the contents of the different registers containing the data that is currently in use for or has been processed by OS processing are transferred to respective stack areas (1 to n).

Then, after the current value of the program counter has been transferred to the stack area, the value written to the interrupt address (A to n) corresponding to the interrupt terminal to which the data or the like was inputted is written into the program counter. Owing to this rewriting of the program counter value, the program currently being processed is suspended (held) and the interrupt processing routine of FIG. 25 is launched.

In the interrupt processing routine of FIG. 25, first the interrupt processing routine (S800) is launched, next the flag of the event flag corresponding to the terminal etc. that received the interrupt is set (S802), and finally an interrupt processing routine termination command is issued (S804), thereby terminating the interrupt processing routine.

Upon issuance and execution of this interrupt processing routine termination command, the hardware-based processing is restarted in the microcomputer and the values transcribed to the stack areas (1 to n) at the time of suspension are written back to the original registers, whereafter the program counter value temporarily saved at the time of suspension is rewritten to the program counter from the stack area, thereby terminating the interrupt processing sequence and restoring the state immediately before the interrupt. From this point onward, the suspended (held) program being executed up to immediately before the interrupt is executed again.

Next, the antennas will be explained.

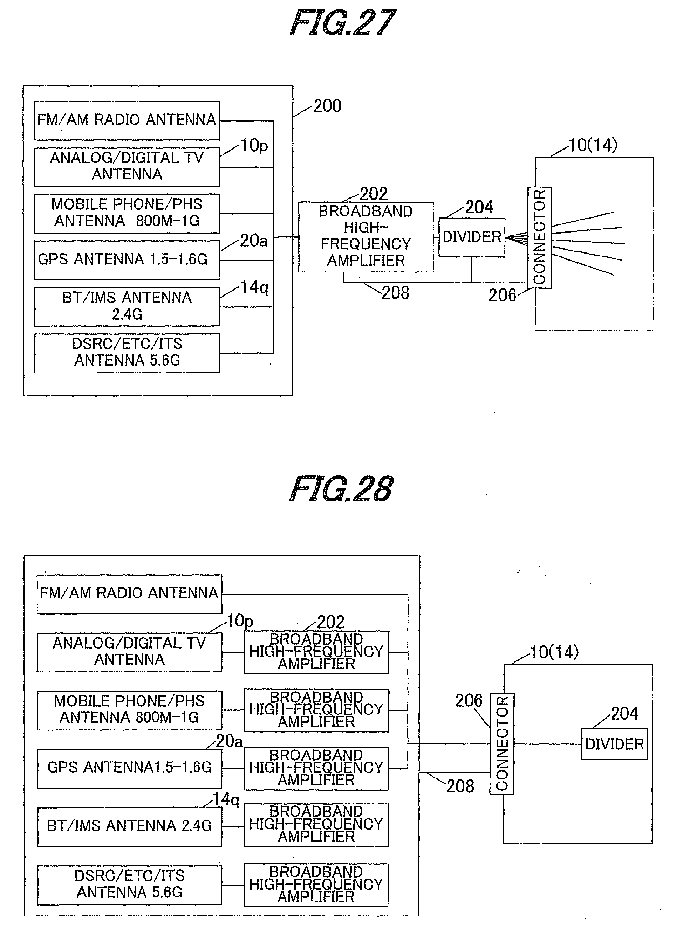

As can be seen from FIGs. 6 and 7, the navigation apparatus according to this embodiment has numerous antennas. Aside from the navigation apparatus, the vehicle is equipped with an FM/AM radio, which also has an antenna. Although it is possible to install the antennas independently, this embodiment uses a unitary film antenna 200, as shown in FIG. 27.

The output of the film antenna 200 is amplified by a broadband high-frequency amplifier 202, whereafter it is divided by a divider 204 and forwarded through a connector 206 for input to the base unit 10 (or front panel unit 14 or cradle unit 12). The symbol 208 designates a power line. The film antenna 200 is stuck on one among, for example, the windshield 18, rear window, roof outer surface, rearview mirror or the like of the vehicle.

Otherwise, as shown in FIG. 28, it is possible to internally install the high-frequency amplifier 202 for each antenna 200 and send the outputs to the base unit 10 through the connector 206 and divider 204. In this case, no high-frequency amplifier 202 needs to be connected to the FM/AM radio antenna because its wavelength is relatively long.

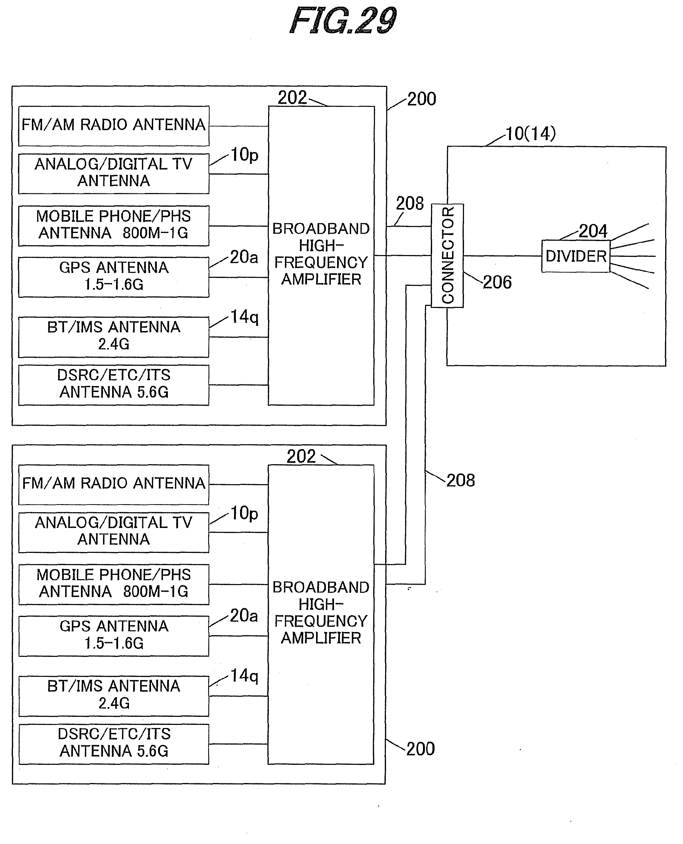

Otherwise, as shown in FIG. 29, it is possible to provide multiple film antennas 200, stick them on different ones of the windshield 18, rear window, roof outer surface, rearview mirror or the like, and use the divider 204 of the base unit 10 or the like to select the one with higher electric field strength.

As set out in the foregoing, this embodiment is configured to have a navigation apparatus having: a base unit 10 that is fastenable to a vehicle and is equipped with at least a microcomputer (system microcomputer 10i); and a front panel unit 14 that is attachable to and detachable from the base unit 10 and is equipped with at least a liquid crystal panel (display) 14b displaying map data and a microcomputer (navigation microcomputer 14m) performing a navigation function to indicate a determined location of the vehicle on the map data, **characterized in that**: there are provided with at least three sensors (detectors) including a receiver 20 that receives a GPS signal, a wheel speed sensor 22 that detects rotational speed of a wheel of the vehicle and a gyrosensor 24 that detects angular velocity about a vertical axis of the vehicle; and the microcomputer of the front panel unit 14 determines the detector or detectors to be used for determining the location of the vehicle in accordance with output condition of the detector or detectors (S 10 to S 18). With this, the sensor(s) used for location determination can be optimally selected to enhance the accuracy of vehicle location determination, while the flexibility of sensor use in location determination can be improved in the point that the location determination is not necessarily restricted to use of the three sensors.

Further, and similarly, ease of use as a navigation apparatus can be improved by the adoption of the detachable format enabling the front panel unit 14 to be detached from the base unit 10 and mounted in another vehicle or to be taken home for input of destinations, routes and the like.

Further, it is configured to have a navigation apparatus having: a base unit 10 that is fastenable to a vehicle and is equipped with at least a microcomputer (system microcomputer 10i); and a front panel unit 14 that is attachable to and detachable from the base unit and is equipped with at least a liquid crystal panel (display) 14b displaying map data and a microcomputer (navigation microcomputer 14m) performing a navigation function to indicate a determined location of the vehicle on the map data, **characterized in that**: there are provided with at least three sensors (detectors) including a receiver 20 that receives a GPS signal, a wheel speed sensor 22 that detects rotational speed of a wheel of the vehicle and a gyrosensor 24 that detects angular velocity about a vertical axis of the vehicle; and the microcomputer of the front panel unit 14 determines the detector or detectors to be used for determining the location of the vehicle in accordance with attached/detached condition of the front panel unit 14 (S20 to S28). With this, the flexibility of sensor use in location determination can be improved.

Further, and similarly, ease of use as a navigation apparatus can be improved by the adoption of the detachable format enabling the front panel unit 14 to be detached from the base unit 10 and mounted in another vehicle or to be taken home for input of destinations, routes and the like.

Further, the apparatus further includes: a cradle unit 12 that is fastenable to the vehicle and is equipped with at least a microcomputer (cradle microcomputer) and a receiver 20 receiving a GPS signal, wherein the front panel unit 14 is attachable to and detachable from the cradle unit 12; and the microcomputer of the front panel unit 14 determines the location of the vehicle using outputs of the three sensors (detectors) when the front panel unit 14 is attached to the base unit 10 (S24, S26), and determines the location of the vehicle using only the GPS signal when the front panel unit 14 is attached to the cradle unit 12 (S24, S28). With this, in addition to the foregoing effects, the cradle unit 12 that is attachable/detachable with the front panel unit 14 and determines location using GPS signals is provided, thereby further enhancing ease of use as a navigation apparatus.

Note that the gyrosensor 24 is required for location determination in the three-sensor mode. Should the gyrosensor 24 be built into the front panel unit 14, the sensitivity might change and accuracy decline owing to looseness of front panel unit attachment or inclination resulting from tilt adjustment of the front panel unit 14. Size reduction of the front panel unit 14 itself might also be affected. In addition, if the output of the wheel speed sensor should be transferred to the front panel unit 14, the number of contact terminals between the front panel unit 14 and base unit 10 would increase.

As a countermeasure, it would be possible to build the gyrosensor 24 into the base unit 10 and transfer the gyro data and the output of the wheel speed sensor 22 to the navigation microcomputer 14m through the serial communication line after reading them in with the system microcomputer 10i in the base unit 10. However, in this case the routing through the system microcomputer 10i would give rise to a delay in information transfer to the navigation microcomputer 14m and shift the timing relative to the GPS data acquisition.

The data of the three sensors is inherently location information, distance traveled information and direction information at each timing and must be simultaneously acquired and processed. Discrepancy in acquisition times affects location accuracy.

However, the navigation apparatus according to this embodiment is configured to install also the GPS signal receiver 20 on the base unit 10 side and so that the location information obtained from the GPS is, along with the gyro data and the output of the wheel speed sensor 22, also sent to the navigation microcomputer 14m after being sorted and integrated by the system microcomputer 10i, whereby the delay caused by data transfer through the system microcomputer 10i is the same for all of the data of the three sensors, so that no such inconvenience occurs.

Note that also in this configuration, if the CPU processing capacity of the system microcomputer 10i is high, the self-location estimation and/or navigation functions can also be conducted on the system microcomputer 10i side. However, in order to display the display map data compiled by the system microcomputer 10i on the liquid crystal panel 14b of the front panel unit 14, the image data compiled by the system microcomputer 10i would either be sent to the navigation microcomputer 14m without modification and converted to an image signal for display by the navigation microcomputer 14m or be converted to an analog image signal by the system microcomputer 10i and transferred to the front panel unit 14, to be displayed on the liquid crystal panel 14b.

Since the map data is sent as color image data of one to five images per second, the data transfer volume is large. If transfer over a parallel bus should be attempted, the data lines (signal lines) between the front panel unit 14 and base unit 10 would increase considerably.

Further, in the case of transfer over serial data lines, the data signal lines would be monopolized by the map data transfer owing to the great map data transfer volume, so that the transfer of other information to be transferred from the system microcomputer 10i to the navigation microcomputer 14m would become slow.

Further, in the case of moving the navigation functions from the navigation microcomputer 14m to the system microcomputer 10i, while it would be possible to lower the CPU capacity of the navigation microcomputer 14m, microcomputers with processing capability on a level enabling navigation would have to be incorporated as the system microcomputer 10i and cradle microcomputer 12b, which would increase the system upgrade cost. Moreover, some users are likely to buy more than one cradle unit 12, so that concentrating highly intelligent functions in the front panel unit 14 will lower their total costs.

In consideration of the foregoing, this embodiment is configured to complete navigation functions in the navigation microcomputer 14m of the front panel unit 14 and use the system microcomputer 10i of the base unit 10 to conduct peripheral equipment control.

Note that even in the case where the GPS signal receiver 20 is connected to the front panel unit 14, the gyrosensor 24 is installed in the base unit 10 and the wheel speed sensor 22 is connected to the base unit 10, the different signal data can be synchronized by the methods set out below.

1. The system microcomputer 10i integrates the outputs of the gyrosensor 24 and wheel speed sensor 22 and sends them to the navigation microcomputer 14m together with timestamp data. The navigation microcomputer 14m also stores the GPS data to memory paired with GPS data acquisition time timestamp data and conducts self-location estimation by combining data of the same time as the timestamp received from the system microcomputer 10i.

2. A system that maintains constant intervals among the time of wheel speed sensor 22 and gyrosensor 24 output acquisition by the system microcomputer 10i, the time of transfer of these data to the navigation microcomputer 14m, and the time of transfer of the GPS data from the GPS signal receiver 20 to the navigation microcomputer 14m, are designed, and the different sensor signal acquisition times in the navigation microcomputer 14m are managed and synchronized.

Further, as explained in the foregoing, this embodiment is configured to have a navigation apparatus having: a base unit 10 that is fastenable to a vehicle and is equipped with at least a microcomputer (system microcomputer 10i); and a front panel unit 14 that is attachable to and detachable from the base unit and is equipped with at least a liquid crystal panel (display) 14b displaying map data and a microcomputer (navigation microcomputer 14m) performing a navigation function to indicate a determined location of the vehicle on the map data, **characterized in that:** the location of the vehicle is determined by using at least one of three sensors (detectors) including a receiver 20 that receives a GPS signal, a wheel speed sensor 22 that detects rotational speed of a wheel of the vehicle and a gyrosensor 24 that detects angular velocity about a vertical axis of the vehicle; and a short-range transceiver module (BT module) 14q including an antenna 14p, and a dedicated image data receiving module (wireless module) 14x are installed on the front panel unit, i.e., on the back thereof.

Since the dedicated image data receiving module (wireless module) 14x is thus installed in the front panel unit 14 which is also installed with the navigation microcomputer 14m operating the liquid crystal panel 14b in this manner, images can be displayed without time lag.

The frequency of the wireless modules, including the dedicated receiving module 14x, is 2.4 G Moreover, they use a band of about 1/3 of their permitted bandwidth, and at the time of communication, select from among the trisected bands the frequency band whose communication condition is best and communicate without changing that band, thereby enabling high-speed communication stably. If BT (Bluetooth) communication using the same band should be simultaneously attempted, the communication might slow in speed and become noisy, and therefore, as was set out earlier regarding the procession of FIG. 16, it acceptable not to use BT communication when using the rear camera.

In addition, also in the case of an arrangement in which the images of a front camera are received using the same wireless module, as 2/3 of the band still remains, if 1/3 of the band is used for front camera images, high-speed communication is stably possible, while stable BT communication is also possible because the remaining 1/3 of the band is reserved for BT communication.

In addition, the dedicated short-range transceiver module (BT module) 14q including the antenna 14p is installed on the front panel unit 14, more specifically, on the back thereof, so that communication with the mobile telephone hands-free microphone in the vehicle is facilitated.

Further, as explained in the foregoing, the embodiment is configured to have a navigation apparatus having: a base unit 10 that is fastenable to a vehicle and is equipped with at least a microcomputer (system microcomputer 10i); and a front panel unit 14 that is attachable to and detachable from the base unit and is equipped with at least a liquid crystal panel (display) 14b displaying map data and a microcomputer (navigation microcomputer 14m) performing a navigation function to indicate a determined location of the vehicle on the map data, **characterized in that**: the location of the vehicle is determined by using at least one of three sensors (detectors) including a receiver 20 that receives a GPS signal, a wheel speed sensor 22 that detects rotational speed of a wheel of the vehicle and a gyrosensor 24 that detects angular velocity about a vertical axis of the vehicle; the microcomputer (system microcomputer 10i) of the base unit retains the location of the vehicle A even after the front panel unit 14 is detached from the base unit 10; and the microcomputer (navigation microcomputer 14m) of the front panel unit 14 determines the location of the vehicle based on driving condition of the vehicle (S200 to S216 of FIG. 14).

In addition to the foregoing effects, this makes it possible by using the stored data to immediately determine location even when the front panel unit 14 is detached, insofar as the vehicle is not driving, while use of incorrect location data can be prevented because it is possible to avoid using the stored data when the vehicle has moved.

Further, as explained in the foregoing, the embodiment is configured to have a navigation apparatus having: a base unit 10 that is fastenable to a vehicle and is equipped with at least a microcomputer (system microcomputer 10i); and a front panel unit 14 that is attachable to and detachable from the base unit and is equipped with at least a liquid crystal panel (display) 14b displaying map data and a microcomputer (navigation microcomputer 14m) performing a navigation function to indicate a determined location of the vehicle on the map data, **characterized in that:** the location of the vehicle is determined by using at least one of three sensors (detectors) including a receiver 20 that receives a GPS signal, a wheel speed sensor 22 that detects rotational speed of a wheel of the vehicle and a gyrosensor 24 that detects angular velocity about a vertical axis of the vehicle; a control program of the microcomputer (navigation microcomputer 14m) of the front panel unit is configured to include a graphical user interface (GUI) function that is provided with a liquid crystal panel displaying a menu and a touch panel overlaid thereon on the liquid crystal panel 14b to be pressed by a user to execute a specified function, an application function that executes the operation selected through the graphical user interface function, and a platform function that defines at least processing times for the functions; and an undeletable button is displayed on the touch panel (FIG. 21, S500 to S508 of FIG. 22).

This facilitates user operation by giving the user a visual understanding of the operation method and simplifies user operation even further by making it possible to narrow down the menu buttons as required. Further, even when users customize the GUI on their own, they do not end up inadvertently deleting necessary buttons. **I**n addition, modification in accordance with the vehicle model is also facilitated.

Further, as explained in the foregoing, the embodiment is configured to have a navigation apparatus having: a base unit 10 that is fastenable to a vehicle and is equipped with at least a microcomputer (system microcomputer 10i); and a front panel unit 14 that is attachable to and detachable from the base unit and is equipped with at least a liquid crystal panel (display) 14b displaying map data and a microcomputer (navigation microcomputer 14m) performing a navigation function to indicate a determined location of the vehicle on the map data, **characterized in that:** the location of the vehicle is determined by using at least one of three sensors (detectors) including a receiver 20 that receives a GPS signal, a wheel speed sensor 22 that detects rotational speed of a wheel of the vehicle and a gyrosensor 24 that detects angular velocity about a vertical axis of the vehicle; and a tuner (TV tuner 10q) that receives a TV image is provided in the base unit 10 such that an output (TV image signal) of the tuner is transferred from the microcomputer of the base unit to the front panel unit.

Since the system microcomputer 10i of the base unit 10 thus receives the output of the wheel speed sensor 22, it becomes possible to easily determine whether the vehicle is driving, and restrict the operation of the TV tuner 10q when driving is found to be in progress. Moreover, since the determination of whether the vehicle is driving and the restriction of TV tuner 10q operation are completed inside the base unit 10, it can make difficult to disable the TV view restriction by hacking from the outside.

Further, the effect of path impedance and noise can be mitigated to enhance picture quality by transferring the image signal to the front panel unit 14 after converting it to a digital signal in the TV tuner 10q, thereby making it possible to improve picture quality.

Further, as explained in the foregoing, the embodiment is configured to have a navigation apparatus having: a base unit 10 that is fastenable to a vehicle and is equipped with at least a microcomputer (system microcomputer 10i); and a front panel unit 14 that is attachable to and detachable from the base unit and is equipped with at least a liquid crystal panel (display) 14b displaying map data and a microcomputer (navigation microcomputer 14m) performing a navigation function to indicate a determined location of the vehicle on the map data, **characterized in that**: the location of the vehicle is determined by using at least one of three sensors (detectors) including a receiver 20 that receives a GPS signal, a wheel speed sensor 22 that detects rotational speed of a wheel of the vehicle and a gyrosensor 24 that detects angular velocity about a vertical axis of the vehicle, and characterized by: an FM transmitter 12e; and means (EEPROM 12f) for storing a database of frequencies of local radio stations in a region where the vehicle is traveling, wherein a vacant frequency for the region where the vehicle is traveling is searched and the searched frequency is displayed on the liquid crystal panel 14b of the front panel unit 14.

More specifically, the navigation apparatus includes a cradle unit 12 that is attachable to or detachable from the front panel unit and is equipped with at least a microcomputer (cradle microcomputer 12b), wherein the FM transmitter 12e is installed in the cradle unit 12; and the microcomputer (cradle microcomputer 12b) of the cradle unit 12 searches a vacant frequency for a region where the vehicle is traveling and displays the searched frequency on the liquid crystal panel 14b of the front panel unit 14.

As a result, by tuning the receiver to the frequency, the user can listen to music contents and voice guidance outputted from the onboard speaker and can listen to the music contents and voice guidance in a low-noise condition.

### Second Embodiment

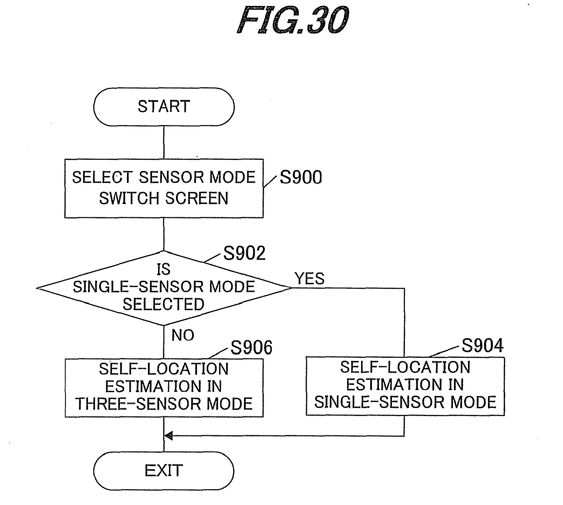

FIG. 30 is a flowchart similar to the flowchart of FIG. 10, showing a navigation apparatus according to a second embodiment of the present invention. The illustrated processing is, like that of FIG. 10, also executed by the navigation microcomputer 14m.

Now to explain, the illustrated processing commences when the user operates a sensor mode switch screen suitably displayed on the touch panel 14s located on the liquid crystal panel 14b, i.e., when the touch panel 14s is pressed, whereupon, in S900, the sensor mode switch screen is displayed in response to the touch panel operation and the user is prompted to make a selection.

Next, the program goes to S902, in which it is checked whether the user selected the single-sensor mode, i.e., whether an instruction was inputted from the outside regarding the detector to be used for determining the location of the vehicle A, and when the result is YES, the program goes to S904, in which it is determined that self-location estimation is to be done in the single-sensor mode, i.e., that the self-location (vehicle A) is to be determined by the output (GPS signal) of the GPS signal receiver 20, and when it is NO, to S906, in which it is determined that self-location estimation is to be done in the three-sensor mode, i.e., that self-location (vehicle A) is to be determined by the outputs of the three sensors (GPS signal receiver 20, wheel speed sensor 22 and gyrosensor), i.e., the detector or detectors to be used for determining the location of the vehicle A are determined in accordance with an instruction from the outside.

Note that when the three-sensor mode or single-sensor mode has been determined by the navigation microcomputer 14m in the flowchart of FIG. 10 or the flowchart of FIG. 11 of the first embodiment, the processing of FIG. 30 is given priority.

To explain this point, there may arise circumstances that the user can readily discern; or that only the user can detect, such as that the tires were changed to tires of a different diameter, e.g., snow tires, or that the road surface condition changed considerably, e.g., when an ordinary road surface changed to a slippery, icy road surface. The same is true when the vehicle itself is new and the navigation microcomputer 14m (or system microcomputer 10i) has not yet fmished learning the output of the wheel speed sensor 22 adequately.

Since in such a case an error occurs when self-location is determined in the three-sensor mode using the output of the wheel speed sensor 22, the user is enabled to select the sensor in response to the circumstances, more specifically is enabled to select the single-sensor mode, by inputting an instruction from the outside. Note that the instruction from the outside is not limited to an instruction from the user and other persons such as a dealer, worker or the like, but can be an input signal or the like from another apparatus.

Further, it is also possible to forcibly switch to the three-sensor mode in the case where, after the single-sensor mode was determined by the navigation microcomputer 14m in the processing of S904, the learning period in the new environment is completed and the accuracy of location determination using the wheel speed sensor 22 is assured.

As explained in the foregoing, the second embodiment is configured to have a navigation apparatus having: a base unit 10 that is fastenable to a vehicle and is equipped with at least a microcomputer (system microcomputer 10i); and a front panel unit 14 that is attachable to and detachable from the base unit 10 and is equipped with at least a liquid crystal panel (display) 14b displaying map data and a microcomputer (navigation microcomputer 14m) performing a navigation function to indicate a determined location of the vehicle on the map data, **characterized in that:** there are provided with at least three sensors (detectors) including a receiver 20 that receives a GPS signal, a wheel speed sensor 22 that detects rotational speed of a wheel of the vehicle and a gyrosensor 24 that detects angular velocity about a vertical axis of the vehicle; and when an instruction regarding the detector or detectors to be used for determining the location of the vehicle is inputted from outside (S900, S902), the microcomputer of the front panel unit 14 determiners the detector or detectors to be used for determining the location of the vehicle in accordance with the instruction from the outside (S904, S906).

As a result, when a radical change the user can readily discern arises in the road surface condition, such as when the tires were changed to tires of a different diameter, e.g., snow tires, or when an ordinary road surface changes to a slippery, icy road surface, the accuracy of vehicle location determination can be further enhanced by enabling selection in response to the change. The remaining configuration and effects are no different from the first embodiment.

Note that insofar as claims 1 to 3 are concerned, it suffices for the navigation apparatuses according to the first and second embodiments to comprise the base unit 10 and front panel unit 14, and these claims hold good without the cradle unit 12.

Moreover, although the case of there being multiple base units 10 or cradle units 12 was explained in the forgoing, it is acceptable for there to be a single base unit 10 or cradle unit 12.

### INDUSTRIAL APPLICABILITY

According to this invention, in the navigation apparatus having a base unit that is fastenable to a vehicle; and a front panel unit that is attachable to and detachable from the base unit, it is configured such that there are provided with at least three detectors including a receiver that receives a GPS signal, a wheel speed sensor that detects rotational speed of a wheel of the vehicle and a gyrosensor that detects angular velocity about a vertical axis of the vehicle; and the microcomputer of the front panel unit determines the detector or detectors to be used for determining the location of the vehicle in accordance with output condition of the detector or detectors. Since the determination is made based on the output condition of the detector or detectors, the sensor(s) used for location determination can be optimally selected to enhance the accuracy of vehicle location determination, while the flexibility of detector use in location determination can be improved in the point that the location determination is not necessarily restricted to use of the three sensors.

## Claims

1. A navigation apparatus having:
a base unit that is fastenable to a vehicle and is equipped with at least a microcomputer; and
a front panel unit that is attachable to and detachable from the base unit and is equipped with at least a display displaying map data and a microcomputer performing a navigation function to indicate a determined location of the vehicle on the map data,
**characterized in that:**
there are provided with at least three detectors including a receiver that receives a GPS signal, a wheel speed sensor that detects rotational speed of a wheel of the vehicle and a gyrosensor that detects angular velocity about a vertical axis of the vehicle; and
the microcomputer of the front panel unit determines the detector or detectors to be used for determining the location of the vehicle in accordance with output condition of the detector or detectors.

2. The apparatus according to claim 1, wherein when an instruction regarding the detector or detectors to be used for determining the location of the vehicle is inputted from outside, the microcomputer of the front panel unit determines the detector or detectors to be used for determining the location of the vehicle in accordance with the instruction from the outside.

3. A navigation apparatus having:
a base unit that is fastenable to a vehicle and is equipped with at least a microcomputer; and
a front panel unit that is attachable to and detachable from the base unit and is equipped with at least a display displaying map data and a microcomputer performing a navigation function to indicate a determined location of the vehicle on the map data,
**characterized in that**:
there are provided with at least three detectors including a receiver that receives a GPS signal, a wheel speed sensor that detects rotational speed of a wheel of the vehicle and a gyrosensor that detects angular velocity about a vertical axis of the vehicle; and
the microcomputer of the front panel unit determines the detector or detectors to be used for determining the location of the vehicle in accordance with attached/detached condition of the front panel unit.

4. The apparatus according to claim 3, further including:
a cradle unit that is fastenable to the vehicle and is equipped with at least a microcomputer and a receiver receiving a GPS signal,
wherein the front panel unit is attachable to and detachable from the cradle unit; and
the microcomputer of the front panel unit determines the location of the vehicle using outputs of the three detectors when the front panel unit is attached to the base unit, and determines the location of the vehicle using only the GPS signal when the front panel unit is attached to the cradle unit.

5. A navigation apparatus having:
a base unit that is fastenable to a vehicle and is equipped with at least a microcomputer; and
a front panel unit that is attachable to and detachable from the base unit and is equipped with at least a liquid crystal panel displaying map data and a microcomputer performing a navigation function to indicate a determined location of the vehicle on the map data,
**characterized in that**:
there are provided with at least three detectors including a receiver that receives a GPS signal, a wheel speed sensor that detects rotational speed of a wheel of the vehicle and a gyrosensor that detects angular velocity about a vertical axis of the vehicle; and
a short-range transceiver module including an antenna, and a dedicated image data receiving module are installed on the front panel unit.

6. A navigation apparatus having:
a base unit that is fastenable to a vehicle and is equipped with at least a microcomputer; and
a front panel unit that is attachable to and detachable from the base unit and is equipped with at least a liquid crystal panel displaying map data and a microcomputer performing a navigation function to indicate a determined location of the vehicle on the map data,
**characterized in that**:
there are provided with at least three detectors including a receiver that receives a GPS signal, a wheel speed sensor that detects rotational speed of a wheel of the vehicle and a gyrosensor that detects angular velocity about a vertical axis of the vehicle;
the microcomputer of the base unit retains the location of the vehicle even after the front panel unit is detached from the base unit; and
the microcomputer of the front panel unit determines the location of the vehicle based on driving condition of the vehicle.

7. A navigation apparatus having:
a base unit that is fastenable to a vehicle and is equipped with at least a microcomputer; and
a front panel unit that is attachable to and detachable from the base unit and is equipped with at least a liquid crystal panel displaying map data and a microcomputer performing a navigation function to indicate a determined location of the vehicle on the map data,
**characterized in that**:
there are provided with at least three detectors including a receiver that receives a GPS signal, a wheel speed sensor that detects rotational speed of a wheel of the vehicle and a gyrosensor that detects angular velocity about a vertical axis of the vehicle;
a control program of the microcomputer of the front panel unit is configured to include a graphical user interface function that is provided with a liquid crystal panel displaying a menu and a touch panel overlaid thereon on the liquid crystal panel to be pressed by a user to execute a specified function, an application function that executes the operation selected through the graphical user interface function, and a platform function that defines at least processing times for the functions; and
an undeletable button is displayed on the touch-panel.

8. A navigation apparatus having:
a base unit that is fastenable to a vehicle and is equipped with at least a microcomputer; and
a front panel unit that is attachable to and detachable from the base unit and is equipped with at least a liquid crystal panel displaying map data and a microcomputer performing a navigation function to indicate a determined location of the vehicle on the map data,
**characterized in that**:
there are provided with at least three detectors including a receiver that receives a GPS signal, a wheel speed sensor that detects rotational speed of a wheel of the vehicle and a gyrosensor that detects angular velocity about a vertical axis of the vehicle; and
a tuner that receives a TV image is provided in the base unit such that an output of the tuner is transferred from the microcomputer of the base unit to the front panel unit.

9. A navigation apparatus having:
a base unit that is fastenable to a vehicle and is equipped with at least a microcomputer; and
a front panel unit that is attachable to and detachable from the base unit and is equipped with at least a liquid crystal panel displaying map data and a microcomputer performing a navigation function to indicate a determined location of the vehicle on the map data,
**characterized by**:
at least a receiver that receives a GPS signal;
an FM transmitter; and
means for storing a database of frequencies of local radio stations in a region where the vehicle is traveling,
wherein a vacant frequency for the region where the vehicle is traveling is searched and the searched frequency is displayed on the liquid crystal panel of the front panel unit.

10. The apparatus according to claim 9, further including:
a cradle unit that is attachable to or detachable from the front panel unit and is equipped with at least a microcomputer,
wherein the FM transmitter is installed in the cradle unit; and
the microcomputer of the cradle unit searches a vacant frequency for a region where the vehicle is traveling and displays the searched frequency on the liquid crystal panel of the front panel unit.
